# EUROPEAN PATENT SPECIFICATION

(11) **EP 4 205 291 B1**
(45) Date of publication and mention of the grant of the patent: **28.01.2026**
(21) Application number: 20951894.3
(22) Date of filing: 02.09.2020
(51) Int. Cl.: H04B 7/0456

(54) **DEVICES FOR BEAMFORMING WITH EXTENDED CODEBOOK SIZE**
VORRICHTUNGEN ZUR STRAHLFORMUNG MIT ERWEITERTER CODEBUCH-GRÖSSE
DISPOSITIFS DE FORMATION DE FAISCEAUX AVEC TAILLE DE LIVRE DE CODES ÉTENDUE

(43) Date of publication of application: 05.07.2023
(73) Proprietor: Huawei Technologies Co., Ltd., Shenzhen, Guangdong 518129 (CN)
(72) Inventor: TSODIK, Genadiy, 4524075 Hod Hasharon (IL); SHILO, Shimon, 4524075 Hod Hasharon (IL); REICH, Mor, 4524075 Hod Hasharon (IL); LIANG, Dandan, Shenzhen, Guangdong 518129 (CN); YU, Jian, Shenzhen, Guangdong 518129 (CN)
(74) Representative: Gill Jennings & Every LLP
(86) International application number: PCT/CN2020/112964
(87) International publication number: WO 2022/047646

(56) References cited:
- WO-A1-2016/021831
- CN-A- 103 001 680
- CN-A- 104 737 465
- CN-A- 107 852 204
- CN-A- 108 028 736
- US-A1- 2019 349 067
- US-A1- 2020 112 350
- "Multi-access Edge Computing (MEC); WLAN Information API-ETSI GS MEC 028 V2.1.1", ETSI GROUP SPECIFICATION, EUROPEAN TELECOMMUNICATIONS STANDARDS INSTITUTE (ETSI), SOPHIA-ANTIPOLIS ; FRANCE, 9 June 2020 (2020-06-09), pages 1 - 46, XP014375012

## Description

### TECHNICAL FIELD

The present disclosure relates to devices and techniques for beamforming with extended codebook size, in particular for enhanced WiFi communication. The disclosure particularly relates to a beamformer device transmitting a beamforming announcement frame indicating an extended codebook size to a beamformee device; and a beamformee device reporting a compressed beamforming report indicating an extended Codebook size to a beamformer device. The disclosure further relates to specific tables indicating the extended Codebook size.

### BACKGROUND

Compressed Beamforming Report is part of a sounding procedure, defined for transmission of beamforming information from beamformee to beamformer. It is used by IEEE 802.11n/ac/ax versions (802.11 or 11n, 11ac, 11ax for short) of the WiFi standard. A Compressed Beamforming Report consists of a MIMO (Multiple-Input Multiple-Output) Control Field that defines various parameter indications (e.g. Nc, Ng, codebook size), general feedback information (e.g. average SNR (signal-to-noise ratio) per stream) and per-tone compressed data which includes precoder matrix and per-tone SNR (for MU (multi-user) feedback type).

The compressed precoder matrix is defined by a set of angles where each angle is quantized by predefined number of bits. The number of bits to be used for quantization is defined by the standard (codebook size) and differs for different feedback format and Ng values. The codebook size is indicated by the beamformee and the beamformer in the NDPA (Null Data Packet Announcement) and the MIMO Control Field respectively.

The new WiFi standard IEEE 802.11be introduces a larger MIMO size of up to 16 total streams and up to 8 STAs (Stations) in a MU-MIMO group. In particular, codebook sizes defined by IEEE 802.11ax may degrade the performance in some of the scenarios introduced by IEEE 802.11be. Those scenarios may require more accurate precoder matrix information.

US 2019/0349067 A1 discloses systems, methods, and devices related to signaling and use of multiple transmission chains. A device may determine bits indicative of eight or fewer spatial streams. The device may encode the bits by generating an indication of more than eight spatial streams. The device may determine one or more fields of a frame, the one or more fields including the encoded bits. The device may send the frame.

### SUMMARY

It is the object of this disclosure to provide devices and techniques for improving performance of beamforming in advanced communication schemes such as EHT (Extreme High Throughput) WiFi, for example according to IEEE 802.11be, which provide extended codebook sizes.

This object is achieved by the features of the independent claims. Further implementation forms are apparent from the dependent claims, the description and the figures.

A basic idea of this disclosure is to extend the codebook sizes and corresponding signalling of existing WiFi schemes in order to support requirements of new extended WiFi schemes with respect to beamforming. The number of bits used for quantization of compressed precoder matrix data is updated to include the new requirements.

The extension of codebook sizes was determined based on test results of IEEE 802.11ax WiFi communication enhanced with more complex scenarios introduced by IEEE 802.11be WiFi.

Simulation results have shown that codebook sizes defined by IEEE 802.11ax may degrade the performance in some scenarios introduced by IEEE 802.11be. Thus, the disclosure introduces an extension of the codebook size and provides the relevant signaling for a new set of codebook sizes.

In particular, a main idea of this disclosure is to support codebook size in MU (multi-user) format of (11,9) bits and extend the codebook size in SU (single user) format to (8,6) bits.

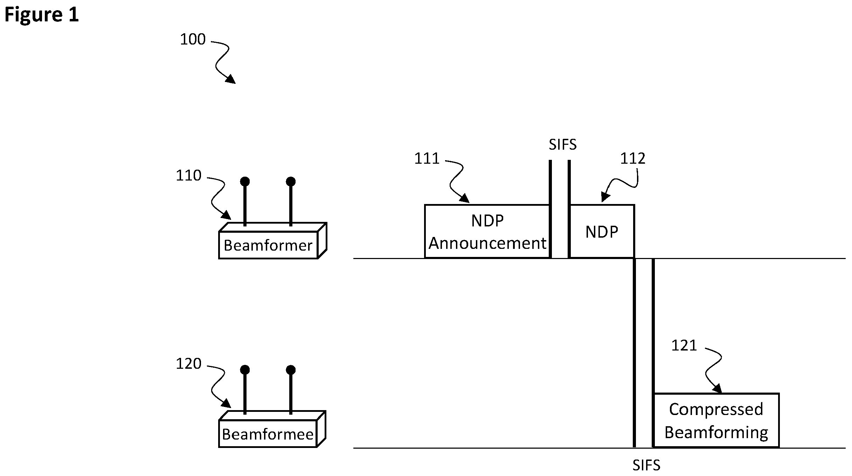

The disclosure presents two main aspects which are related to beamforming announcement and compressed beamforming reporting as illustrated in Figure 1, each of these aspects related to multi-user beamforming and single user beamforming.

As described before, codebook size requires aligned indication in the NDPA frame 111 (see Figure 1). Thus, the disclosure presents the following three options for the EHT STA Info Field and also a specific indication per option:
- Option 1: Codebook size is extended by 1 bit (2 bits in total);
- Option 2: Codebook size is 1 bit, and new subfield "Codebook Type" of 1 bit is added;
- Option 3: Codebook size is 1 bit.

The MIMO Control Field contains indication parameters for the transmitted compressed beamforming report 121 as depicted in Figure 1. The disclosure also defines the following three options for changing the MIMO Control Field of IEEE 802.11be:
- Option 1: MIMO Control Field is extended by one byte (8 bytes in total) where Codebook Information is extended by one bit;
- Option 2: MIMO Control Field is extended by one byte (8 bytes in total), Codebook Information remains 1 bit and additional special indication bit is defined;
- Option 3: MIMO Control Field remains identical to IEEE 802.11ax.

The disclosure presents an update for parameters and formats defined by HE (High Efficiency) WiFi, e.g. according to IEEE 802.11ax, to include new and extended cases introduced by EHT WiFi, e.g. according to IEEE 802.11be.

In order to describe the disclosure in detail, the following terms, abbreviations and notations will be used:
- BW: bandwidth
- MIMO: Multiple-Input Multiple-Output
- MU: multi-user
- SU: single user
- HE: High Efficiency
- EHT: Extreme High Throughput
- Ng: number of tones, tone grouping factor
- Nc: number of spatial streams
- Na: number of angles
- Nr: number of transmit antennas
- NDP: Null Data Packet
- NDPA: Null Data Packet Announcement
- RU: resource unit
- OFDMA: Orthogonal Frequency Division Multiple Access
- STA: Station according to WiFi notation
- AP: Access point according to WiFi notation
- NDP: Null Data Packet
- SS: Spatial Stream
- MCS: modulation constellation scheme

Resource Unit (RU) is a unit in OFDMA terminology used in WiFi schemes to denote a group of subcarriers (tones) used in both Downlink (DL) and Uplink (UL) transmissions. With OFDMA, different transmit powers may be applied to different RUs. There are maximum of 9 RUs for 20 MHz bandwidth, 18 in case of 40 MHz and more in case of 80 or 160 MHz bandwidth. The RUs enable an Access Point to allow multi-users to access it simultaneously and efficiently.

According to a first aspect, the disclosure relates to a beamformer device for announcing beamforming in a multi-user beamforming communication system, wherein the beamformer device is configured to: transmit a beamforming announcement frame, in particular a Null Data Packet Announcement, NDPA, frame to a beamformee device of the multi-user beamforming communication system, wherein the beamforming announcement frame comprises a station information subfield, STA Info Subfield, according to a second WiFi scheme supporting a larger MIMO size for beamforming than a first WiFi scheme, wherein the STA Info Subfield according to the second WiFi scheme comprises a new option to indicate higher bit numbers (*ϕ*, *ψ*) of angle information for a compressed beamforming report than a STA Info Subfield according to the first WiFi scheme.

In an embodiment, the first WiFi scheme is 802.11ax WiFi, and the second WiFi scheme is 802.11be WiFi, or vice versa.

Thus, an improved beamformer device is provided, allowing for efficient data transmission with improved performance by beamforming in a multi-user beamforming communication system. The beamformer device also offers advantages by supporting IEEE 802.11be MIMO schemes with minimal changes to indication formats and preserving existing codebook sizes.

Any device that shapes its transmitted frames is called a beamformer device, and a receiver of such frames is called a beamformee device. 802.11 defines new terms for the sender and receiver of beamformed frames because in a single exchange it is possible to have only one initiator and one responder, but a station may be both a beamformer and a beamformee.

Beamforming depends on channel measurement, called channel sounding in the 802.11 standard, to determine how to radiate energy in a preferred direction.

Channel sounding consists of three major steps:
1. The beamformer begins the process by transmitting a Null Data Packet Announcement (NDPA) frame, which is used to gain control of the channel and to identify beamformees. Beamformees will respond to the Null Data Packet (NDP) Announcement, while all other stations will simply defer channel access until the sounding sequence is complete.
2. The beamformer follows the NDP Announcement with a null data packet (NDP). The value of an NDP is that the receiver can analyze the OFDM training fields to calculate the channel response, and therefore the steering matrix. For multi-user transmissions, multiple NDPs may be transmitted.
3. The beamformee analyzes the training fields in the received NDP and calculates a feedback matrix. The feedback matrix enables the beamformer to calculate the steering matrix.

The new option of the STA Info Subfield according to the second WiFi scheme is implemented by enhancing a Codebook Size field of the STA Info Subfield to a higher bit size than a maximum bit size defined for the Codebook Size field by the first WiFi scheme, in particular to a size of 2 bits, wherein the additional bit combinations of the enhanced Codebook Size field define one or more indications of higher bit numbers (*ϕ*, *ψ*) of angle information for the compressed beamforming report.

According to an exemplary implementation of the beamformer device, the additional bit combinations of the enhanced Codebook Size field define one indication of higher bit numbers (*ϕ*, *ψ*) = {11, 9} of angle information for a number of tones, Ng, equal to 4 and one indication of higher bit numbers (*ϕ*, *ψ*) = {11, 9} of angle information for a number of tones, Ng, equal to 16.

According to an exemplary implementation of the beamformer device, the two indications of higher bit numbers (*ϕ*, *ψ*) = {11, 9} of angle information are defined for an enhanced 2bit Codebook Size field when an additional bit of the enhanced 2bit Codebook Size field is indicating a logical one, and indications of bit numbers (*ϕ*, *ψ*) of angle information defined by the first WiFi scheme are preserved when the additional bit of the enhanced 2bit Codebook Size field is indicating a logical zero.

According to an exemplary implementation of the beamformer device, for the enhanced 2bit Codebook Size field and a 2bit Feedback Type and Ng field within the STA Info Subfield, a bitmap comprising one or more entries is defined, each of the one or more entries comprising 4 bits and indicating a respective combination of an enhanced Codebook Size field with a size of 2 bits and a Feedback Type and Ng field with a size of 2 bits. In an embodiment, the bitmap for the enhanced 2bit Codebook Size field and the 2bit Feedback Type and Ng field within the STA Info Subfield is defined as the following combinations:

| **Feedback Type and Ng** | | **Codebook Size** | | **Description** |
|---|---|---|---|---|
| **B0** | **B1** | **B0** | **B1** | |
| 0 | 0 | 0 | 0 | SU, Ng = 4, quantization resolution (ϕ,φ) = {4,2} |
| 0 | 0 | 0 | 1 | SU, Ng = 4, quantization resolution (ϕ,φ) = {6,4} |
| 0 | 1 | 0 | 0 | SU, Ng = 16, quantization resolution (ϕ,φ) = {4,2} |
| 0 | 1 | 0 | 1 | SU, Ng = 16, quantization resolution (ϕ,φ) = {6,4} |
| 1 | 0 | 0 | | MU, Ng = 4, quantization resolution (ϕ,φ) = {7,5} |
| 1 | 0 | 0 | 1 | MU, Ng = 4, quantization resolution (ϕ,φ) = {9,7} |
| 1 | 1 | 0 | 0 | CQI |
| 1 | 1 | 0 | 1 | MU, Ng = 16, quantization resolution (ϕ,φ) = {9,7} |
| 1 | 0 | 1 | 1 | MU, Ng = 4, quantization resolution (ϕ,φ) = {11,9} |
| 1 | 1 | 1 | 1 | MU, Ng = 16, quantization resolution (ϕ,φ) = {11,9} |
| Other | | | | Reserved |

According to an exemplary implementation of the beamformer device, the new option of the STA Info Subfield according to the second WiFi scheme is implemented by enhancing the STA Info Subfield to a higher bit size by adding a Codebook Type field of 1 bit while maintaining a 1 bit Codebook Size field, wherein the additional bit combinations for the Codebook Size field and the additional Codebook Type field define one or more indications of higher bit numbers (*ϕ*, *ψ*) of angle information for the compressed beamforming report.

According to an exemplary implementation of the beamformer device, the additional bit combinations of the enhanced STA Info Subfield are defined by setting the Codebook Type field to a logical one; and original settings of the enhanced STA Info Subfield as defined by the first WiFi scheme are maintained by setting the Codebook Type field to a logical zero.

According to an exemplary implementation of the beamformer device, for the 1bit Codebook Size field and a 2bit Feedback Type and Ng field within the STA Info Subfield, a bitmap comprising one or more entries is defined, each of the one or more entries comprising 3 bits and indicating a respective combination of a Codebook Size field with a size of 1 bit and a Feedback Type and Ng field with a size of 2 bits. In an embodiment, the bitmap for the 1bit Codebook Size field and the 2bit Feedback Type and Ng field within the STA Info Subfield is defined as the following combinations:

| **Feedback Type and Ng** | | **Codebook Size** | **Description** |
|---|---|---|---|
| **B0** | **B1** | **B0** | |
| 0 | 0 | 0 | SU, Ng = 4, quantization resolution (ϕ,φ) = {4,2} |
| 0 | 0 | 1 | SU, Ng = 4, quantization resolution (ϕ,φ) = {6,4} |
| 0 | 1 | 0 | SU, Ng = 16, quantization resolution (ϕ,φ) = {4,2} |
| 0 | 1 | 1 | SU, Ng = 16, quantization resolution (ϕ,φ) = {6,4} |
| 1 | 0 | | MU, Ng = 4, quantization resolution (ϕ,φ) = {9,7} |
| 1 | 0 | 1 | MU, Ng = 4, quantization resolution (ϕ,φ) = {11,9} |
| 1 | 1 | 0 | CQI |
| 1 | 1 | 1 | MU, Ng = 16, quantization resolution (ϕ,φ) = {9,7} |

According to an exemplary implementation of the beamformer device, the new option of the STA Info Subfield according to the second WiFi scheme is implemented by maintaining a size of the STA Info Subfield and Codebook Size within the STA Info Subfield according to the first WiFi scheme, and replacing one or more indications of bit numbers (*ϕ*, *ψ*) of angle information defined for the first WiFi scheme to one or more indications of higher bit numbers (*ϕ*, *ψ*) of angle information defined for the second WiFi scheme.

When maintaining a size of STA Info Subfield and Codebook Size within the STA Info Subfield, the structure of STA Info Subfield may be different, but a total number of bits and in particular a number of bits for Codebook Size will remain the same according to an embodiment.

According to an exemplary implementation of the beamformer device, an indication of bit numbers (*ϕ*, *ψ*) = {7, 5} of angle information is replaced by an indication of bit numbers (*ϕ*, *ψ*) = {11, 9} of angle information; and an indication of bit numbers (*ϕ*, *ψ*) = {9, 7} of angle information is preserved.

According to an exemplary implementation of the beamformer device, for the 1bit Codebook Size field and a 2bit Feedback Type and Ng field within the STA Info Subfield, a bitmap comprising one or more entries is defined, each of the one or more entries comprising 3 bits and indicating a respective combination of a Codebook Size field with a size of 1 bit and a Feedback Type and Ng field with a size of 2 bits. In an embodiment, the bitmap can be defined as the following table:

| **Feedback Type and Ng** | | **Codebook Size** | **Description** |
|---|---|---|---|
| **B25** | **B26** | **B28** | |
| 0 | 0 | 0 | SU, Ng = 4, quantization resolution (ϕ,φ) = {4,2} |
| 0 | 0 | 1 | SU, Ng = 4, quantization resolution (ϕ,φ) = {6,4} |
| 0 | 1 | 0 | SU, Ng = 16, quantization resolution (ϕ,φ) = {4,2} |
| 0 | 1 | 1 | SU, Ng = 16, quantization resolution (ϕ,φ) = {6,4} |
| 1 | 0 | | MU, Ng = 4, quantization resolution (ϕ,φ) = {11,9} |
| 1 | 0 | 1 | MU, Ng = 4, quantization resolution (ϕ,φ) = {9,7} |
| 1 | 1 | 0 | CQI |
| 1 | 1 | 1 | MU, Ng = 16, quantization resolution (ϕ,φ) = {9,7} |

According to an exemplary implementation of the beamformer device, an indication of bit numbers (*ϕ*, *ψ*) = {7, 5} of angle information is replaced by an indication of bit numbers (*ϕ*, *ψ*) = {11, 9} of angle information; and wherein an ascending order of Codebook Size is preserved.

According to an exemplary implementation of the beamformer device, for the 1bit Codebook Size field and a 2bit Feedback Type and Ng field within the STA Info Subfield,
a bitmap comprising one or more entries is defined, each of the one or more entries comprising 3 bits and indicating a respective combination of a Codebook Size field with a size of 1 bit and a Feedback Type and Ng field with a size of 2 bits. In an embodiment, the bitmap can be defined as the following combinations:

| **Feedback Type and Ng** | | **Codebook Size** | **Description** |
|---|---|---|---|
| **B27** | **B28** | **B30** | |
| 0 | 0 | 0 | SU, Ng = 4, quantization resolution (ϕ,φ) = {4,2} |
| 0 | 0 | 1 | SU, Ng = 4, quantization resolution (ϕ,φ) = {6,4} |
| 0 | 1 | 0 | SU, Ng = 16, quantization resolution (ϕ,φ) = {4,2} |
| 0 | 1 | 1 | SU, Ng = 16, quantization resolution (ϕ,φ) = {6,4} |
| 1 | 0 | | MU, Ng = 4, quantization resolution (ϕ,φ) = {9,7} |
| 1 | 0 | 1 | MU, Ng = 4, quantization resolution (ϕ,φ) = {11,9} |
| 1 | 1 | 0 | CQI |
| 1 | 1 | 1 | MU, Ng = 16, quantization resolution (ϕ,φ) = {9,7} |

According to an exemplary implementation of the beamformer device, an indication of bit numbers (*ϕ*, *ψ*) = {7, 5} of angle information is replaced by an indication of bit numbers (*ϕ*, *ψ*) = {11, 9} of angle information if a given size of a precoder matrix, in particular given by a number of space-time streams in an NDP packet, is larger than a threshold, in particular larger than 8.

According to an exemplary implementation of the beamformer device, for the 1bit Codebook Size field and a 2bit Feedback Type and Ng field within the STA Info Subfield, a bitmap comprising one or more entries is defined, each of the one or more entries comprising 3 bits and indicating a respective combination of a Codebook Size field with a size of 1 bit and a Feedback Type and Ng field with a size of 2 bits. In an embodiment, the bitmap for the 1bit Codebook Size field and a 2bit Feedback Type and Ng field within the STA Info Subfield can be defined as the following combinations:

| **Feedback Type and Ng** | | **Codebook Size** | **Description** |
|---|---|---|---|
| **B27** | **B28** | **B30** | |
| 0 | 0 | 0 | SU, Ng = 4, quantization resolution (ϕ,φ) = {4,2} |
| 0 | 0 | 1 | SU, Ng = 4, quantization resolution (ϕ,φ) = {6,4} |
| 0 | 1 | 0 | SU, Ng = 16, quantization resolution (ϕ,φ) = {4,2} |
| 0 | 1 | 1 | SU, Ng = 16, quantization resolution (ϕ,φ) = {6,4} |
| 1 | 0 | | MU, Ng = 4, quantization resolution (ϕ,φ) = {7,5} if Nr ≤ 8, (ϕ,φ) = {11,9} otherwise |
| 1 | 0 | 1 | MU, Ng = 4, quantization resolution (ϕ,φ) = {9,7} |
| 1 | 1 | 0 | CQI |
| 1 | 1 | 1 | MU, Ng = 16, quantization resolution (ϕ,φ) = {9,7} |

According to an exemplary implementation of the beamformer device, the new option of the STA Info Subfield according to the second WiFi scheme is signaled within STA Info Subfield by a Codebook Size field and a Feedback Type and number of tones, Ng, field of the STA Info Subfield.

According to an exemplary implementation of the beamformer device, the first WiFi scheme is 802.11ax WiFi and the second WiFi scheme is 802.11be WiFi, or vice versa.

According to a second aspect, the disclosure relates to a beamformer device for announcing beamforming in a single-user beamforming communication system, wherein the beamformer device is configured to: transmit a beamforming announcement frame, in particular a Null Data Packet Announcement, NDPA, frame to a beamformee device of the single-user beamforming communication system, wherein the beamforming announcement frame comprises a station information subfield, STA Info Subfield, according to a second WiFi scheme supporting a larger MIMO size for beamforming than a first WiFi scheme, wherein the STA Info Subfield according to the second WiFi scheme comprises a new option to indicate higher bit numbers (*ϕ*, *ψ*) of angle information for a compressed beamforming report than a STA Info Subfield according to the first WiFi scheme.

Thus, an improved beamformer device is provided, allowing for efficient data transmission with improved performance by beamforming in a single-user beamforming communication system. The beamformer device also offers advantages by supporting IEEE 802.11be MIMO schemes with minimal changes to indication formats and preserving existing codebook sizes.

The new option of the STA Info Subfield according to the second WiFi scheme is implemented by enhancing a Codebook Size field of the STA Info Subfield to a higher bit size than a maximum bit size defined for the Codebook Size field by the first WiFi scheme, in particular to a size of 2 bits, wherein the additional bit combinations of the enhanced Codebook Size field define one or more indications of higher bit numbers (*ϕ*, *ψ*) of angle information for the compressed beamforming report.

According to an exemplary implementation of the beamformer device according to the second aspect, the additional bit combinations of the enhanced Codebook Size field define one indication of higher bit numbers (*ϕ*, *ψ*) = {8, 6} of angle information for a number of tones, Ng, equal to 4 and one indication of higher bit numbers (*ϕ*, *ψ*) = {8, 6} of angle information for a number of tones, Ng, equal to 16.

According to an exemplary implementation of the beamformer device according to the second aspect, the two indications of higher bit numbers (*ϕ*, *ψ*) = {8, 6} of angle information are defined for an enhanced 2bit Codebook Size field when an additional bit of the enhanced 2bit Codebook Size field is indicating a logical one, and indications of bit numbers (*ϕ*, *ψ*) of angle information defined by the first WiFi scheme are preserved when the additional bit of the enhanced 2bit Codebook Size field is indicating a logical zero.

According to an exemplary implementation of the beamformer device according to the second aspect, for the enhanced 2bit Codebook Size field and a 2bit Feedback Type and Ng field within the STA Info Subfield, a bitmap comprising one or more entries is defined, each of the one or more entries comprising 4 bits and indicating a respective combination of an enhanced Codebook Size field with a size of 2 bits and a Feedback Type and Ng field with a size of 2 bits. In an embodiment, the bitmap is defined as the following combinations:

| **Feedback Type and Ng** | | **Codebook Size** | | **Description** |
|---|---|---|---|---|
| **B27** | **B28** | **B30** | **B31** | |
| 0 | 0 | 0 | 0 | SU, Ng = 4, quantization resolution (ϕ,φ) = {4,2} |
| 0 | 0 | 0 | 1 | SU, Ng = 4, quantization resolution (ϕ,φ) = {6,4} |
| 0 | 1 | 0 | 0 | SU, Ng = 16, quantization resolution (ϕ,φ) = {4,2} |
| 0 | 1 | 0 | 1 | SU, Ng = 16, quantization resolution (ϕ,φ) = {6,4} |
| 1 | 0 | 0 | | MU, Ng = 4, quantization resolution (ϕ,φ) = {7,5} |
| 1 | 0 | 0 | 1 | MU, Ng = 4, quantization resolution (ϕ,φ) = {9,7} |
| 1 | 1 | 0 | 0 | CQI |
| 1 | 1 | 0 | 1 | MU, Ng = 16, quantization resolution (ϕ,φ) = {9,7} |
| 0 | 0 | 1 | 1 | MU, Ng = 4, quantization resolution (ϕ,φ) = {8,6} |
| 0 | 1 | 1 | 1 | MU, Ng = 16, quantization resolution (ϕ,φ) = {8,6} |
| Other | | | | Reserved |

According to an exemplary implementation of the beamformer device according to the second aspect, the new option of the STA Info Subfield according to the second WiFi scheme is implemented by enhancing the STA Info Subfield to a higher bit size by adding a Codebook Type field of 1 bit while maintaining a 1 bit Codebook Size field, wherein the additional bit combinations for the Codebook Size field and the additional Codebook Type field define one or more indications of higher bit numbers (*ϕ*, *ψ*) of angle information for the compressed beamforming report.

According to an exemplary implementation of the beamformer device according to the second aspect, the additional bit combinations of the enhanced STA Info Subfield are defined by setting the Codebook Type field to a logical one; and wherein original settings of the enhanced STA Info Subfield as defined by the first WiFi scheme are maintained by setting the Codebook Type field to a logical zero.

According to an exemplary implementation of the beamformer device according to the second aspect, for the 1bit Codebook Size field and a 2bit Feedback Type and Ng field within the STA Info Subfield, a bitmap comprising one or more entries is defined, each of the one or more entries comprising 3 bits and indicating a respective combination of a Codebook Size field with a size of 1 bit and a Feedback Type and Ng field with a size of 2 bits. In an embodiment, the bitmap is defined as the following combinations:

| **Feedback Type and Ng** | | **Codebook Size** | **Description** |
|---|---|---|---|
| **B25** | **B26** | **B28** | |
| 0 | 0 | 0 | SU, Ng = 4, quantization resolution (ϕ,φ) = {4,2} |
| 0 | 0 | 1 | SU, Ng = 4, quantization resolution (ϕ,φ) = {8,6} |
| 0 | 1 | 0 | SU, Ng = 16, quantization resolution (ϕ,φ) = {4,2} |
| 0 | 1 | 1 | SU, Ng = 16, quantization resolution (ϕ,φ) = {8,6} |
| 1 | 0 | | MU, Ng = 4, quantization resolution (ϕ,φ) = {7,5} |
| 1 | 0 | 1 | MU, Ng = 4, quantization resolution (ϕ,φ) = {9,7} |
| 1 | 1 | 0 | CQI |
| 1 | 1 | 1 | MU, Ng = 16, quantization resolution (ϕ,φ) = {9,7} |

According to an exemplary implementation of the beamformer device according to the second aspect, the new option of the STA Info Subfield according to the second WiFi scheme is implemented by maintaining a size of the STA Info Subfield and Codebook Size within the STA Info Subfield according to the first WiFi scheme, and replacing one or more indications of bit numbers (*ϕ*, *ψ*) of angle information defined for the first WiFi scheme to one or more indications of higher bit numbers (*ϕ*, *ψ*) of angle information defined for the second WiFi scheme.

When maintaining a size of STA Info Subfield and Codebook Size within the STA Info Subfield, the structure of STA Info Subfield may be different, but a total number of bits and in particular a number of bits for Codebook Size will remain the same according to an embodiment.

According to an exemplary implementation of the beamformer device according to the second aspect, an indication of bit numbers (*ϕ*, *ψ*) = {6, 4} of angle information is replaced by an indication of bit numbers (*ϕ*, *ψ*) = {8, 6} of angle information; and an indication of bit numbers (*ϕ*, *ψ*) = {4, 2} of angle information is preserved.

According to an exemplary implementation of the beamformer device according to the second aspect, an indication of bit numbers (*ϕ*, *ψ*) = {6, 4} of angle information is replaced by an indication of bit numbers (*ϕ*, *ψ*) = {8, 6} of angle information; and an ascending order of Codebook Size is preserved.

According to an exemplary implementation of the beamformer device according to the second aspect, an indication of bit numbers (*ϕ*, *ψ*) = {6, 4} of angle information is replaced by an indication of bit numbers (*ϕ*, *ψ*) = {8, 6} of angle information if a given size of a precoder matrix, in particular given by a number of space-time streams in an NDP packet, is larger than a threshold, in particular larger than 8.

According to an exemplary implementation of the beamformer device according to the second aspect, for the 1bit Codebook Size field and a 2bit Feedback Type and Ng field within the STA Info Subfield, a bitmap comprising one or more entries is defined, each of the one or more entries comprising 3 bits and indicating a respective combination of a Codebook Size field with a size of 1 bit and a Feedback Type and Ng field with a size of 2 bits. In an embodiment, the bitmap is as the following combinations defined:

| **Feedback Type and Ng** | | **Codebook Size** | **Description** |
|---|---|---|---|
| **B27** | **B28** | **B30** | |
| 0 | 0 | 0 | SU, Ng = 4, quantization resolution (ϕ,φ) = {4,2} |
| 0 | 0 | 1 | SU, Ng = 4, quantization resolution (ϕ,φ) = {6,4} if Nr ≤ 8, (ϕ,φ) = {8,6} otherwise |
| 0 | 1 | 0 | SU, Ng = 16, quantization resolution (ϕ,φ) = {4,2} |
| 0 | 1 | 1 | SU, Ng = 16, quantization resolution (ϕ,φ) = {6,4} if Nr ≤ 8, (ϕ,φ) = {8,6} otherwise |
| 1 | 0 | | MU, Ng = 4, quantization resolution (ϕ,φ) = {7,5} |
| 1 | 0 | 1 | MU, Ng = 4, quantization resolution (ϕ,φ) = {9,7} |
| 1 | 1 | 0 | CQI |
| 1 | 1 | 1 | MU, Ng = 16, quantization resolution (ϕ,φ) = {9,7} |

According to an exemplary implementation of the beamformer device according to the second aspect, the new option of the STA Info Subfield according to the second WiFi scheme is signaled by a Codebook Size field and a Feedback Type and number of tones, Ng, field of the STA Info Subfield.

According to an exemplary implementation of the beamformer device according to the second aspect, the first WiFi scheme is 802.11ax WiFi and the second WiFi scheme is 802.11be WiFi.

According to a third aspect, the disclosure relates to a beamformee device for reporting a compressed beamforming report responsive to a beamforming announcement of a beamformer device in a multi-user beamforming communication system, wherein the beamformee device is configured to: transmit a compressed beamforming report to the beamformer device of the multi-user beamforming communication system responsive to the beamforming announcement frame, in particular a Null Data Packet Announcement, NDPA, frame received from the beamformer device, wherein the compressed beamforming report comprises a MIMO Control Field according to a second WiFi scheme supporting a larger MIMO size for beamforming than a first WiFi scheme, wherein the MIMO Control Field according to the second WiFi scheme comprises a new option to indicate higher bit numbers (*ϕ*, *ψ*) of angle information for the compressed beamforming report than a MIMO Control Field according to the first WiFi scheme.

Thus, an improved beamformee device for reporting a compressed beamforming report is provided, allowing for efficient data transmission with improved performance by beamforming in a multi-user beamforming communication system.

According to an exemplary implementation of the beamformee device, the new option of the MIMO Control Field according to the second WiFi scheme is implemented by enhancing a Codebook Information field of the MIMO Control Field to a higher bit size than a maximum bit size defined for the Codebook Information field by the first WiFi scheme, in particular to a size of 2 bits, wherein the additional bit combinations of the enhanced Codebook Information field define one or more indications of higher bit numbers (*ϕ*, *ψ*) of angle information for the compressed beamforming report.

According to an exemplary implementation of the beamformee device, the additional bit combinations of the enhanced Codebook Information field define an indication of higher bit numbers (*ϕ*, *ψ*) = {11, 9} of angle information.

According to an exemplary implementation of the beamformee device, the indication of higher bit numbers (*ϕ*, *ψ*) = {11, 9} of angle information is defined for an enhanced 2bit Codebook Information field when an additional bit of the enhanced 2bit Codebook Size field is indicating a logical one, and indications of bit numbers (*ϕ*, *ψ*) of angle information defined by the first WiFi scheme are preserved when the additional bit of the enhanced 2bit Codebook Information field is indicating a logical zero.

According to an exemplary implementation of the beamformee device, the new option of the MIMO Control Field according to the second WiFi scheme is implemented by enhancing the MIMO Control Field to a higher bit size by adding a Codebook Type field of 1 bit while maintaining a 1 bit Codebook Information field, wherein the additional bit combinations for the Codebook Information field and the additional Codebook Type field define one or more indications of higher bit numbers (*ϕ*, *ψ*) of angle information for the compressed beamforming report.

According to an exemplary implementation of the beamformee device, the additional bit combinations of the enhanced MIMO Control Field are defined by setting the Codebook Type field to a logical one; and original settings of the enhanced MIMO Control Field as defined by the first WiFi scheme are maintained by setting the Codebook Type field to a logical zero.

According to an exemplary implementation of the beamformee device, the new option of the MIMO Control Field according to the second WiFi scheme is implemented by maintaining a size of the MIMO Control Field and Codebook Size within the MIMO Control Field according to the first WiFi scheme, and replacing one or more indications of bit numbers (*ϕ*, *ψ*) of angle information defined for the first WiFi scheme to one or more indications of higher bit numbers (*ϕ*, *ψ*) of angle information defined for the second WiFi scheme.

When maintaining a size of MIMO Control Field and Codebook Size within the MIMO Control Field, the structure of MIMO Control Field may be different, but a total number of bits and in particular a number of bits for Codebook Size will remain the same according to an embodiment.

According to an exemplary implementation of the beamformee device, an indication of bit numbers (*ϕ*, *ψ*) = {7, 5} of angle information is replaced by an indication of bit numbers (*ϕ*, *ψ*) = {11, 9} of angle information; and an indication of bit numbers (*ϕ*, *ψ*) = {9, 7} of angle information is preserved.

According to an exemplary implementation of the beamformee device, an indication of bit numbers (*ϕ*, *ψ*) = {7, 5} of angle information is replaced by an indication of bit numbers (*ϕ*, *ψ*) = {11, 9} of angle information if a given size of a precoder matrix, in particular given by a number of space-time streams in an NDP packet, is larger than a threshold, in particular larger than 8.

According to an exemplary implementation of the beamformee device, the first WiFi scheme is 802.11ax WiFi and the second WiFi scheme is 802.11be WiFi.

According to a fourth aspect, the disclosure relates to a beamformee device for reporting a compressed beamforming report responsive to a beamforming announcement of a beamformer device in a single-user beamforming communication system, wherein the beamformee device is configured to: transmit a compressed beamforming report to the beamformer device of the single-user beamforming communication system responsive to the beamforming announcement frame, in particular a Null Data Packet Announcement, NDPA, frame received from the beamformer device, wherein the compressed beamforming report comprises a MIMO Control Field according to a second WiFi scheme supporting a larger MIMO size for beamforming than a first WiFi scheme, wherein the MIMO Control Field according to the second WiFi scheme comprises a new option to indicate higher bit numbers (*ϕ*, *ψ*) of angle information for the compressed beamforming report than a MIMO Control Field according to the first WiFi scheme.

Thus, an improved beamformee device for reporting a compressed beamforming report is provided, allowing for efficient data transmission with improved performance by beamforming in a single-user beamforming communication system.

According to an exemplary implementation of the beamformee device according to the fourth aspect, the new option of the MIMO Control Field according to the second WiFi scheme is implemented by enhancing a Codebook Information field of the MIMO Control Field to a higher bit size than a maximum bit size defined for the Codebook Information field by the first WiFi scheme, in particular to a size of 2 bits, wherein the additional bit combinations of the enhanced Codebook Information field define one or more indications of higher bit numbers (*ϕ*, *ψ*) of angle information for the compressed beamforming report.

According to an exemplary implementation of the beamformee device according to the fourth aspect, the additional bit combinations of the enhanced Codebook Information field define an indication of higher bit numbers (*ϕ*, *ψ*) = {8, 6} of angle information.

According to an exemplary implementation of the beamformee device according to the fourth aspect, the indication of higher bit numbers (*ϕ*, *ψ*) = {8, 6} of angle information is defined for an enhanced 2bit Codebook Information field when an additional bit of the enhanced 2bit Codebook Information field is indicating a logical one, and indications of bit numbers (*ϕ*, *ψ*) of angle information defined by the first WiFi scheme are preserved when the additional bit of the enhanced 2bit Codebook Information field is indicating a logical zero.

According to an exemplary implementation of the beamformee device according to the fourth aspect, the new option of the MIMO Control Field according to the second WiFi scheme is implemented by enhancing the MIMO Control Field to a higher bit size by adding a Codebook Type field of 1 bit while maintaining a 1 bit Codebook Information field, wherein the additional bit combinations for the Codebook Information field and the additional Codebook Type field define one or more indications of higher bit numbers (*ϕ*, *ψ*) of angle information for the compressed beamforming report.

According to an exemplary implementation of the beamformee device according to the fourth aspect, the additional bit combinations of the enhanced MIMO Control Field are defined by setting the Codebook Type field to a logical one; and original settings of the enhanced MIMO Control Field as defined by the first WiFi scheme are maintained by setting the Codebook Type field to a logical zero.

According to an exemplary implementation of the beamformee device according to the fourth aspect, the new option of the MIMO Control Field according to the second WiFi scheme is implemented by maintaining a size of the MIMO Control Field and Codebook Size within the MIMO Control Field according to the first WiFi scheme, and replacing one or more indications of bit numbers (*ϕ*, *ψ*) of angle information defined for the first WiFi scheme to one or more indications of higher bit numbers (*ϕ*, *ψ*) of angle information defined for the second WiFi scheme.

When maintaining a size of MIMO Control Field and Codebook Size within the MIMO Control Field, according to an embodiment, the structure of MIMO Control Field may be different, but a total number of bits and in particular a number of bits for Codebook Size will remain the same.

According to an exemplary implementation of the beamformee device according to the fourth aspect, an indication of bit numbers (*ϕ*, *ψ*) = {6, 4} of angle information is replaced by an indication of bit numbers (*ϕ*, *ψ*) = {8, 6} of angle information; and an indication of bit numbers (*ϕ*, *ψ*) = {4, 2} of angle information is preserved.

According to an exemplary implementation of the beamformee device according to the fourth aspect, an indication of bit numbers (*ϕ*, *ψ*) = {6, 4} of angle information is replaced by an indication of bit numbers (*ϕ*, *ψ*) = {8, 6} of angle information if a given size of a precoder matrix, in particular given by a number of space-time streams in an NDP packet, is larger than a threshold, in particular larger than 8.

According to an exemplary implementation of the beamformee device according to the fourth aspect, the first WiFi scheme is 802.11ax WiFi and the second WiFi scheme is 802.11be WiFi.

According to a fifth aspect, the disclosure relates to a method for announcing beamforming in a multi-user beamforming communication system comprises: transmitting a beamforming announcement frame, in particular a Null Data Packet Announcement, NDPA, frame to a beamformee device of the multi-user beamforming communication system, wherein the beamforming announcement frame comprises a station information subfield, STA Info Subfield, according to a second WiFi scheme, in particular 802.11be WiFi, supporting a larger MIMO size for beamforming than a first WiFi scheme, in particular 802.11ax WiFi, wherein the STA Info Subfield according to the second WiFi scheme comprises a new option to indicate higher bit numbers (*ϕ*, *ψ*) of angle information for a compressed beamforming report than a STA Info Subfield according to the first WiFi scheme.

Such a method for announcing beamforming information can improve performance of beamforming in advanced communication schemes such as EHT by operating on a novel set of codebook sizes.

This method may correspond to the beamformer device described above for the first aspect of the disclosure.

According to a sixth aspect, the disclosure relates to a method for reporting a compressed beamforming report responsive to a beamforming announcement of a beamformer device in a multi-user beamforming communication system comprises: transmitting a compressed beamforming report to the beamformer device of the multi-user beamforming communication system responsive to the beamforming announcement frame, in particular a Null Data Packet Announcement, NDPA, frame received from the beamformer device, wherein the compressed beamforming report comprises a MIMO Control Field according to a second WiFi scheme, in particular 802.11be WiFi, supporting a larger MIMO size for beamforming than a first WiFi scheme, in particular 802.11ax WiFi, wherein the MIMO Control Field according to the second WiFi scheme comprises a new option to indicate higher bit numbers (*ϕ*, *ψ*) of angle information for the compressed beamforming report than a MIMO Control Field according to the first WiFi scheme.

Such a method for reporting beamforming information can improve performance of beamforming in advanced communication schemes such as EHT by operating on a novel set of codebook sizes.

This method may correspond to the beamformee device described above for the third aspect of the disclosure.

According to a seventh aspect, the disclosure relates to a computer program product including computer executable code or computer executable instructions that, when executed, causes at least one computer to execute the method according to the aspects above. Such a computer program product may include a non-transient readable storage medium storing program code thereon for use by a processor, the program code comprising instructions for performing the methods or the computing blocks as described hereinafter.

### BRIEF DESCRIPTION OF THE DRAWINGS

Further embodiments of the invention will be described with respect to the following figures, in which:
Fig. 1 shows a schematic diagram 100 illustrating a sounding procedure 100 defined for transmission of beamforming information between beamformer 110 and beamformee 120;
Fig. 2 shows a station information subfield (STA Info Subfield) 200;
Fig. 3 shows an encoding table 300 for a STA Info Subfield illustrating encoding 303 of Feedback Type and Ng subfield 301 and Codebook Size subfield 302 according to Table 9-31a of IEEE 802.11ax standard;
Fig. 4 shows a HE MIMO Control Field 400 of IEEE 802.11ax standard;
Fig. 5 shows a Codebook Size indication 500 in HE MIMO Control Field according to Table 9-93a of IEEE 802.11ax standard;
Figs. 6a and 6b show simulation results of the performance of IEEE 802.11ax codebook size for a number of spatial streams Nss ≤ 12;
Figs. 7a, 7b and 7c show simulation results of the performance of IEEE 802.11ax codebook size for a number of spatial streams Nss > 12;
Figs. 8a and 8b show simulation results of the performance of IEEE 802.11ax codebook size for extreme cases;
Fig. 9a shows an extended encoding table 900 for a STA Info Subfield for multi-user (MU) Format with extensions according to Option 1 of the disclosure;
Fig. 9b shows a first Example of a STA Info Subfield 910 for MU Format with extended Codebook size Field according to Option 1 of the disclosure;
Fig. 9c shows a second Example of a STA Info Subfield 920 for MU Format with extended Codebook size Field according to Option 1 of the disclosure;
Fig. 10a shows an extended encoding table 1000 for a STA Info Subfield for MU Format with extensions according to Option 2 of the disclosure;
Fig. 10b shows a first Example of a STA Info Subfield 1010 for MU Format with Codebook Size and Codebook Type Subfields according to Option 2 of the disclosure;
Fig. 10c shows a second Example of a STA Info Subfield 1020 for MU Format with Codebook Size and Codebook Type Subfields according to Option 2 of the disclosure;
Fig. 11 shows an extended encoding table 1100 for a STA Info Subfield for MU Format with extensions according to Option 3a of the disclosure;
Fig. 12 shows an extended encoding table 1200 for a STA Info Subfield for MU Format with extensions according to Option 3b of the disclosure;
Fig. 13 shows an extended encoding table 1300 for a STA Info Subfield for MU Format with extensions according to Option 3c of the disclosure;
Fig. 14 shows an extended encoding table 1400 for a STA Info Subfield for single user (SU) Format with extensions according to Option 1 of the disclosure;
Fig. 15 shows an extended encoding table 1500 for a STA Info Subfield for SU Format with extensions according to Option 2 of the disclosure;
Fig. 16 shows an extended encoding table 1600 for a STA Info Subfield for SU Format with extensions according to Option 3 of the disclosure;
Fig. 17a shows an exemplary MIMO Control Field 1700 for MU Format with extensions according to Option 1 of the disclosure;
Fig. 17b shows an extended encoding table 1720 for a MIMO Control Field for MU Format with extended Codebook Information Field according to Option 1 of the disclosure;
Fig. 18a shows an exemplary MIMO Control Field 1800 for MU Format with extensions according to Option 2 of the disclosure;
Fig. 18b shows an extended encoding table 1820 for a MIMO Control Field for MU Format with extended Codebook Information Field according to Option 2 of the disclosure;
Fig. 19 shows an extended encoding table 1900 for a MIMO Control Field for MU Format with extended Codebook Information Field according to Option 3a of the disclosure;
Fig. 20 shows an extended encoding table 2000 for a MIMO Control Field for MU Format with extended Codebook Information Field according to Option 3b of the disclosure;
Fig. 21 shows an extended encoding table 2100 for a MIMO Control Field for single user (SU) Format with extended Codebook Information Field according to Option 1 of the disclosure;
Fig. 22 shows an extended encoding table 2200 for a MIMO Control Field for SU Format with extended Codebook Information Field according to Option 2 and Option 3a of the disclosure;
Fig. 23 shows an extended encoding table 2300 for a MIMO Control Field for SU Format with extended Codebook Information Field according to Option 3b of the disclosure;
Fig. 24a shows a schematic diagram illustrating a method 2410 for announcing beamforming in a beamforming communication system according to the disclosure; and
Fig. 24b shows a schematic diagram illustrating a method 2420 for reporting a compressed beamforming report in a beamforming communication system according to the disclosure.

### DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

The methods, devices and systems described herein may be implemented in wireless communication schemes, in particular communication schemes according to WiFi communication standards according to IEEE 802.11, in particular 802.11n/ac/ax versions of the WiFi standard and 802.11be version of the WiFi standard. The described devices may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

The devices described herein may be configured to transmit and/or receive radio signals. Radio signals may be or may include radio frequency signals radiated by a radio transmitting device (or radio transmitter or sender). However, devices described herein are not limited to transmit and/or receive radio signals, also other signals designed for transmission in deterministic communication networks may be transmitted and/or received.

The devices and systems described herein may include processors or processing devices, memories and transceivers, i.e. transmitters and/or receivers. The term "processor" or "processing device" describes any device that can be utilized for processing specific tasks (or blocks or steps). A processor or processing device can be a single processor or a multi-core processor or can include a set of processors or can include means for processing. A processor or processing device can process software or firmware or applications etc.

Fig. 1 shows a schematic diagram 100 illustrating a sounding procedure 100 defined for transmission of beamforming information between beamformer 110 and beamformee 120.

Beamforming depends on channel calibration procedures, called *channel sounding* in the 802.11 WiFi standard, to determine how to radiate energy in a preferred direction.

Channel sounding 100 consists of three major steps:
In a first step, the beamformer 110 begins the process by transmitting a Null Data Packet (NDP) Announcement frame 111, which is used to gain control of the channel and identify beamformees. Beamformees 120 will respond to the NDP Announcement 111, while all other stations will simply defer channel access until the sounding sequence is complete.

In a second step, the beamformer 110 follows the NDP Announcement 111 with a null data packet (NDP) 112. The value of an NDP 112 is that the receiver can analyze the OFDM training fields to calculate the channel response, and therefore the steering matrix. For multi-user transmissions, multiple NDPs 112 may be transmitted.

In a third step, the beamformee 120 analyzes the training fields in the received NDP 112 and calculates a feedback matrix. The feedback matrix which is reported by the beamformee 120 in compressed beamforming report 121 enables the beamformer 110 to calculate the steering matrix to direct transmissions toward the beamformee 120.

In the following, a beamformer device 110 and a beamformee device 120 are described which improve performance of beamforming in advanced communication schemes such as EHT WiFi, for example according to IEEE 802.11be.

Such a novel beamformer device 110 for announcing beamforming in a multi-user or single-user beamforming communication system is configured to: transmit a beamforming announcement frame 111, in particular a Null Data Packet Announcement, NDPA, frame to a beamformee device 120 of the multi-user beamforming communication system. The beamforming announcement frame comprises a station information subfield, STA Info Subfield, according to a second WiFi scheme, e.g. according to IEEE 802.11be WiFi, supporting a larger MIMO size for beamforming than a first WiFi scheme, e.g. IEEE 802.11ax WiFi. The STA Info Subfield according to the second WiFi scheme comprises a new option to indicate higher bit numbers (*ϕ*, *ψ*) of angle information for a compressed beamforming report than a STA Info Subfield according to the first WiFi scheme.

The new option of the STA Info Subfield according to the second WiFi scheme may be implemented by enhancing a Codebook Size field of the STA Info Subfield to a higher bit size than a maximum bit size defined for the Codebook Size field by the first WiFi scheme, in particular to a size of 2 bits, wherein the additional bit combinations of the enhanced Codebook Size field define one or more indications of higher bit numbers (*ϕ*, *ψ*) of angle information for the compressed beamforming report.

The additional bit combinations of the enhanced Codebook Size field define one indication of higher bit numbers (*ϕ*, *ψ*) = {11, 9} of angle information for a number of tones, Ng, equal to 4 and one indication of higher bit numbers (*ϕ*, *ψ*) = {11, 9} of angle information for a number of tones, Ng, equal to 16.

The two indications of higher bit numbers (*ϕ*, *ψ*) = {11, 9} of angle information may be defined for an enhanced 2bit Codebook Size field when an additional bit of the enhanced 2bit Codebook Size field is indicating a logical one, and indications of bit numbers (*ϕ*, *ψ*) of angle information defined by the first WiFi scheme may be preserved when the additional bit of the enhanced 2bit Codebook Size field is indicating a logical zero.

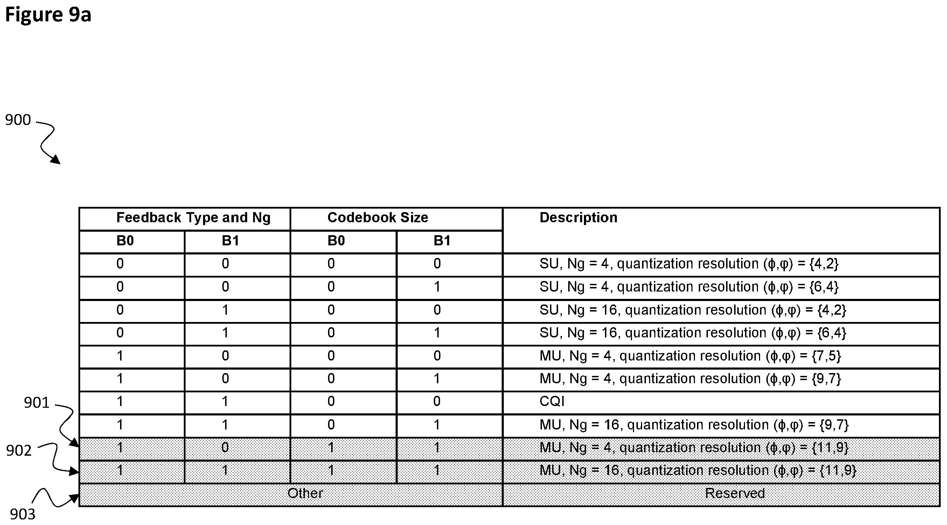

For the enhanced 2bit Codebook Size field and a 2bit Feedback Type and Ng field within the STA Info Subfield, the combinations as shown in Figure 9a may be defined.

The new option of the STA Info Subfield according to the second WiFi scheme may be implemented by enhancing the STA Info Subfield to a higher bit size by adding a Codebook Type field of 1 bit while maintaining a 1 bit Codebook Size field, wherein the additional bit combinations for the Codebook Size field and the additional Codebook Type field define one or more indications of higher bit numbers (*ϕ*, *ψ*) of angle information for the compressed beamforming report.

The additional bit combinations of the enhanced STA Info Subfield may be defined by setting the Codebook Type field to a logical one; and original settings of the enhanced STA Info Subfield as defined by the first WiFi scheme may be maintained by setting the Codebook Type field to a logical zero.

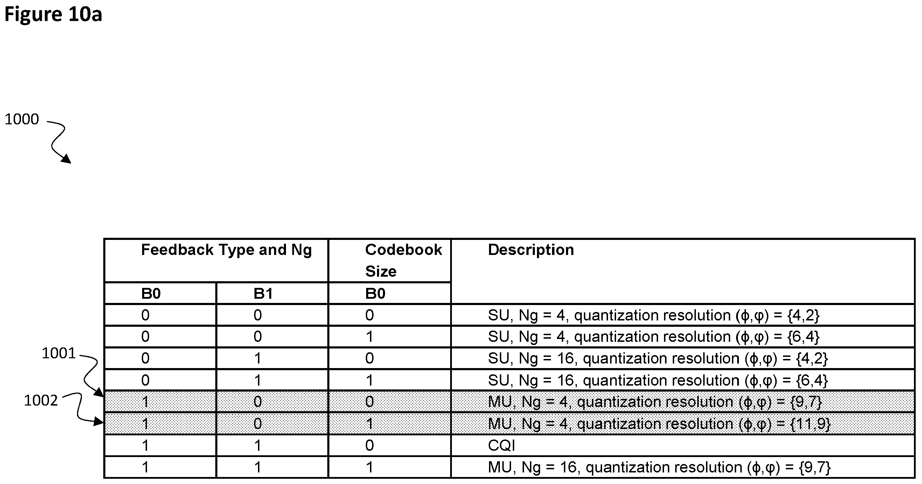

For the 1bit Codebook Size field and a 2bit Feedback Type and Ng field within the STA Info Subfield, the combinations shown in Figure 10a may be defined.

The new option of the STA Info Subfield according to the second WiFi scheme may be implemented by maintaining a size of the STA Info Subfield and Codebook Size within the STA Info Subfield according to the first WiFi scheme, and replacing one or more indications of bit numbers (*ϕ*, *ψ*) of angle information defined for the first WiFi scheme to one or more indications of higher bit numbers (*ϕ*, *ψ*) of angle information defined for the second WiFi scheme.

When maintaining a size of STA Info Subfield and Codebook Size within the STA Info Subfield, the structure of STA Info Subfield may be different, but a total number of bits and in particular a number of bits for Codebook Size will remain the same.

An indication of bit numbers (*ϕ*, *ψ*) = {7, 5} of angle information may be replaced by an indication of bit numbers (*ϕ*, *ψ*) = {11, 9} of angle information; and an indication of bit numbers (*ϕ*, *ψ*) = {9, 7} of angle information may be preserved.

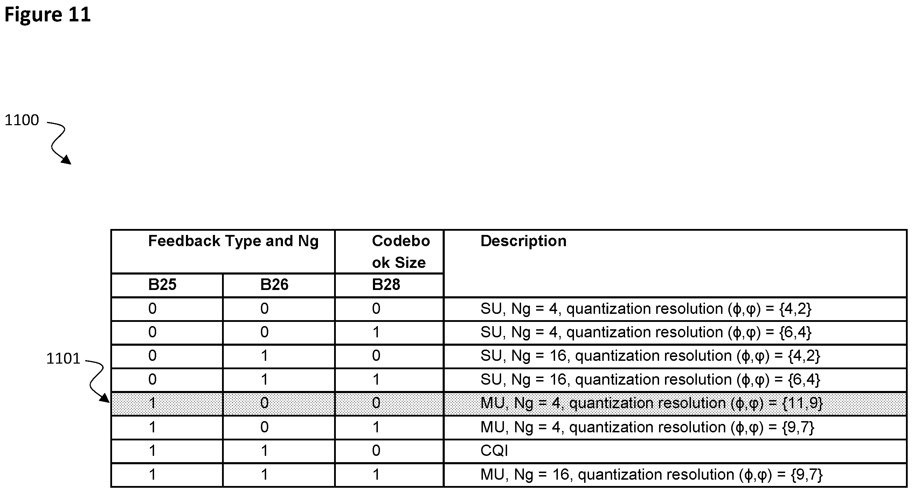

For the 1bit Codebook Size field and a 2bit Feedback Type and Ng field within the STA Info Subfield, the combinations shown in Figure 11 may be defined.

An indication of bit numbers (*ϕ*, *ψ*) = {7, 5} of angle information may be replaced by an indication of bit numbers (*ϕ*, *ψ*) = {11, 9} of angle information, wherein an ascending order of Codebook Size may be preserved.

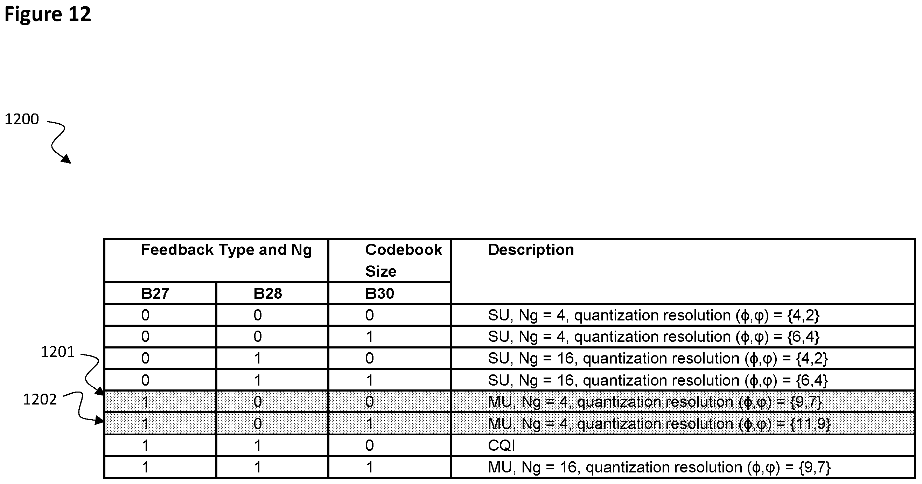

For the 1bit Codebook Size field and a 2bit Feedback Type and Ng field within the STA Info Subfield, the combinations shown in Figure 12 may be defined.

An indication of bit numbers (*ϕ*, *ψ*) = {7, 5} of angle information may be replaced by an indication of bit numbers (*ϕ*, *ψ*) = {11, 9} of angle information if a given size of a precoder matrix, in particular given by a number of space-time streams in an NDP packet, is larger than a threshold, in particular larger than 8.

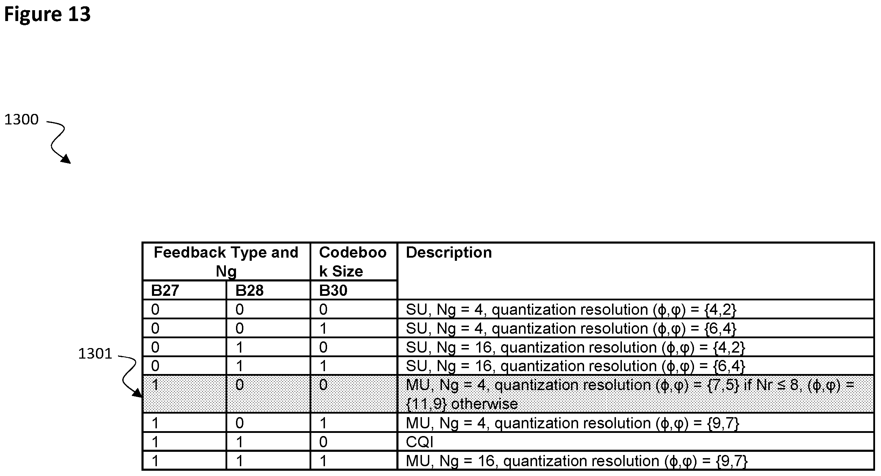

For the 1bit Codebook Size field and a 2bit Feedback Type and Ng field within the STA Info Subfield, the combinations shown in Figure 13 may be defined.

The new option of the STA Info Subfield according to the second WiFi scheme may be signaled within STA Info Subfield by a Codebook Size field and a Feedback Type and number of tones, Ng, field of the STA Info Subfield.

The novel beamformee device 120 for reporting a compressed beamforming report 121 responsive to a beamforming announcement 111 of a beamformer device 110 in a multi-user or single user beamforming communication system is configured to: transmit a compressed beamforming report 121 to the beamformer device 110 of the multi-user or single user beamforming communication system responsive to the beamforming announcement frame 111, in particular a Null Data Packet Announcement, NDPA, frame received from the beamformer device 110. The compressed beamforming report 121 comprises a MIMO Control Field according to a second WiFi scheme, e.g. according to IEEE 802.11be WiFi, supporting a larger MIMO size for beamforming than a first WiFi scheme, e.g. IEEE 802.11ax WiFi. The MIMO Control Field according to the second WiFi scheme comprises a new option to indicate higher bit numbers (*ϕ*, *ψ*) of angle information for the compressed beamforming report than a MIMO Control Field according to the first WiFi scheme.

The new option of the MIMO Control Field according to the second WiFi scheme may be implemented by enhancing a Codebook Information field of the MIMO Control Field to a higher bit size than a maximum bit size defined for the Codebook Information field by the first WiFi scheme, in particular to a size of 2 bits. The additional bit combinations of the enhanced Codebook Information field may define one or more indications of higher bit numbers (*ϕ*, *ψ*) of angle information for the compressed beamforming report.

The additional bit combinations of the enhanced Codebook Information field may define an indication of higher bit numbers (*ϕ*, *ψ*) = {11, 9} of angle information.

The indication of higher bit numbers (*ϕ*, *ψ*) = {11, 9} of angle information may be defined for an enhanced 2bit Codebook Information field when an additional bit of the enhanced 2bit Codebook Size field is indicating a logical one. Indications of bit numbers (*ϕ*, *ψ*) of angle information defined by the first WiFi scheme may be preserved when the additional bit of the enhanced 2bit Codebook Information field is indicating a logical zero.

The new option of the MIMO Control Field according to the second WiFi scheme may be implemented by enhancing the MIMO Control Field to a higher bit size by adding a Codebook Type field of 1 bit while maintaining a 1 bit Codebook Information field. The additional bit combinations for the Codebook Information field and the additional Codebook Type field may define one or more indications of higher bit numbers (*ϕ*, *ψ*) of angle information for the compressed beamforming report.

The additional bit combinations of the enhanced MIMO Control Field may be defined by setting the Codebook Type field to a logical one. Original settings of the enhanced MIMO Control Field as defined by the first WiFi scheme may be maintained by setting the Codebook Type field to a logical zero.

The new option of the MIMO Control Field according to the second WiFi scheme may be implemented by maintaining a size of the MIMO Control Field and Codebook Size within the MIMO Control Field according to the first WiFi scheme, and replacing one or more indications of bit numbers (*ϕ*, *ψ*) of angle information defined for the first WiFi scheme to one or more indications of higher bit numbers (*ϕ*, *ψ*) of angle information defined for the second WiFi scheme.

When maintaining a size of MIMO Control Field and Codebook Size within the MIMO Control Field, the structure of MIMO Control Field may be different, but a total number of bits and in particular a number of bits for Codebook Size will remain the same.

An indication of bit numbers (*ϕ*, *ψ*) = {7, 5} of angle information may be replaced by an indication of bit numbers (*ϕ*, *ψ*) = {11, 9} of angle information. An indication of bit numbers (*ϕ*, *ψ*) = {9, 7} of angle information may be preserved.

An indication of bit numbers (*ϕ*, *ψ*) = {7, 5} of angle information may be replaced by an indication of bit numbers (*ϕ*, *ψ*) = {11, 9} of angle information if a given size of a precoder matrix, in particular given by a number of space-time streams in an NDP packet, is larger than a threshold, in particular larger than 8.

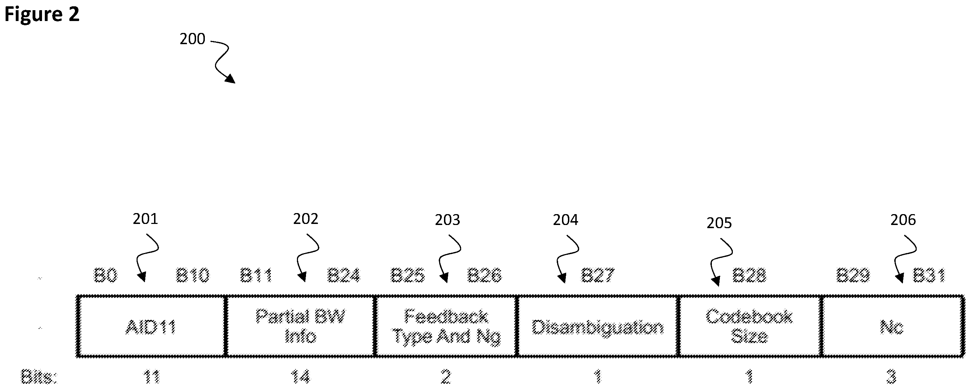

Fig. 2 shows a STA Info Subfield 200. The STA Info Subfield 200 includes a 11bit AID11 subfield 201, a 14bit Partial BW Info subfield 202, a 2bit Feedback Type and Ng subfield 203, a 1bit Disambiguation subfield 204, a 1bit Codebook Size subfield 205 and a 3bit Nc subfield 206.

Sounding parameters are indicated by beamformee 120 within NDPA packet 111 (see Figure 1) as part of STA Info Subfield. Codebook size is a field 205 of 1 bit included in STA Info Subfield as illustrated in Figure 2.

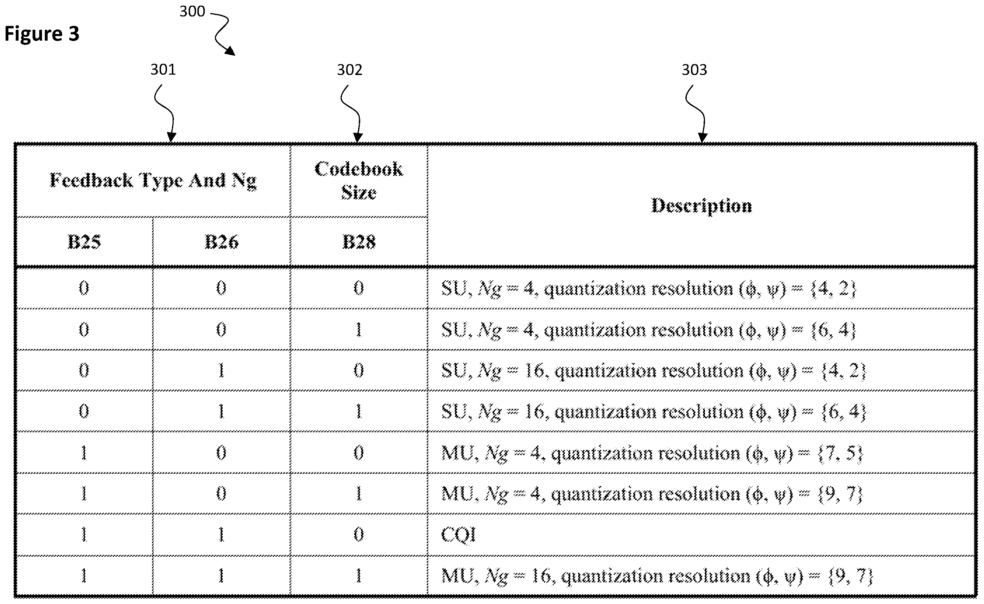

Fig. 3 shows an encoding table 300 for a STA Info Subfield illustrating encoding 303 of Feedback Type and Ng subfield 301 and Codebook Size subfield 302 according to Table 9-31a of IEEE 802.11ax standard. The encoding table 300 defines the following encoding rules depending on Feedback Type and Ng subfield 203 and Codebook Size subfield 205:

| **Feedback Type and Ng** | | **Codebook Size** | **Description** |
|---|---|---|---|
| **B25** | **B26** | **B28** | |
| 0 | 0 | 0 | SU, Ng = 4, quantization resolution (ϕ,φ) = {4,2} |
| 0 | 0 | 1 | SU, Ng = 4, quantization resolution (ϕ,φ) = {6,4} |
| 0 | 1 | 0 | SU, Ng = 16, quantization resolution (ϕ,φ) = {4,2} |
| 0 | 1 | 1 | SU, Ng = 16, quantization resolution (ϕ,φ) = {6,4} |
| 1 | 0 | | MU, Ng = 4, quantization resolution (ϕ,φ) = {7,5} |
| 1 | 0 | 1 | MU, Ng = 4, quantization resolution (ϕ,φ) = {9,7} |
| 1 | 1 | 0 | CQI |
| 1 | 1 | 1 | MU, Ng = 16, quantization resolution (ϕ,φ) = {9,7} |

IEEE 802.11ax standard introduces different formats of feedback report and also defines a codebook size for each format type and each Ng value, as shown in Figure 3.

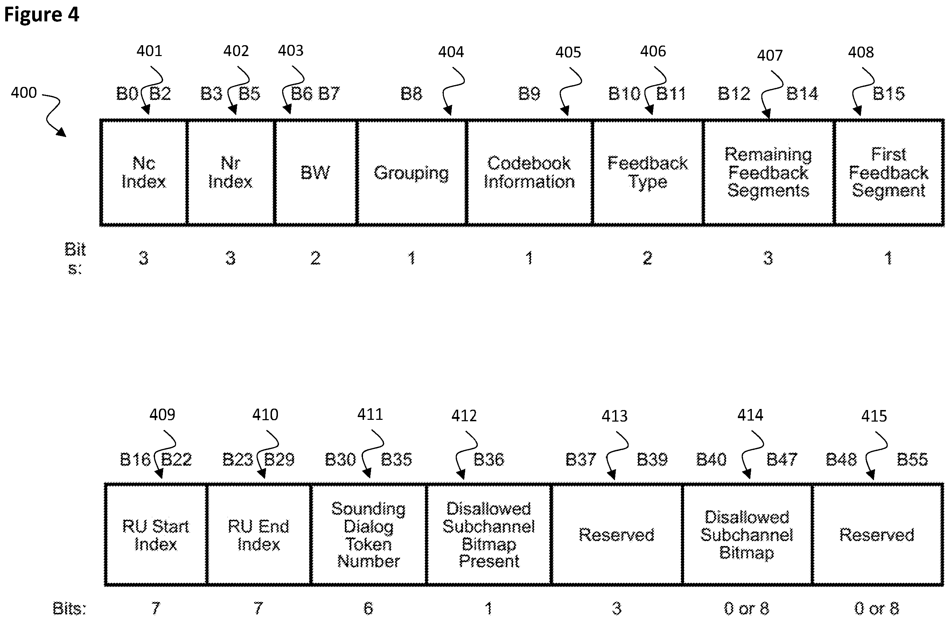

Fig. 4 shows a HE MIMO Control Field 400 of IEEE 802.11ax standard. The HE MIMO Control Field 400 includes a 3bit Nc Index subfield 401, a 3bit Nr Index subfield 402, a 2bit BW subfield 403, a 1bit Grouping subfield 404, a 1bit Codebook Information subfield 405, a 2bit Feedback Type subfield 406, a 3bit Remaining Feedback Segments subfield 407, a 1bit First Feedback Segment subfield 408, a 7bit RU Start Index subfield 409, a 7bit RU End Index subfield 410, a 6bit Sounding Dialog Token Number subfield 411, a 1bit Disallowed Subchannel Bitmap Present subfield 412, a 3bit Reserved subfield 413, a 0 or 8bit Disallowed Subchannel Bitmap subfield 414 and a 0 or 8bit Reserved subfield 415.

Compressed beamforming report includes also indication of the main parameters within MIMO Control Field as depicted in Figure 4.

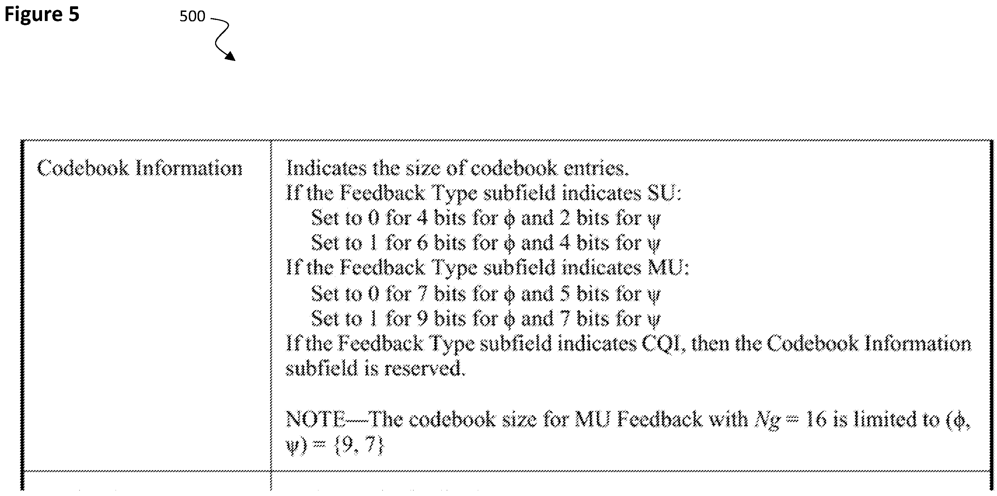

Fig. 5 shows a Codebook Size indication 500 in HE MIMO Control Field according to Table 9-93a of IEEE 802.11ax standard.

The codebook size is defined by Codebook Information and Feedback Type Fields and described in table 9-93a of IEEE 802.11ax as shown in Fig. 5.

SU format is most likely to be used for single user transmissions, where lower precoder accuracy is required. While for MU-MIMO transmissions beamformee usually prefer MU format type with more accurate codebook sizes.

Following this assumption, tests were performed to examine the performance of 802.11ax (11ax for short) codebook size in more complex scenarios introduced by 802.11be (11be for short). Several scenarios were tested:
- Number of Tx antennas - Ntx = 16
- Number of Rx antennas - Nrx = 2
- Number of STAs in MU-MIMO group - 2/6/7/8 with 2 spatial streams per STA
- Channel Estimation method - perfect channel or smoothing at sounding stage and smoothing at data detection stage
- The following MU-MIMO extreme cases were also examined:
   ∘ 4 STAs with 4SS (spatial streams) per STA
   ∘ 6 STAs with 2SS per STA and MCS11

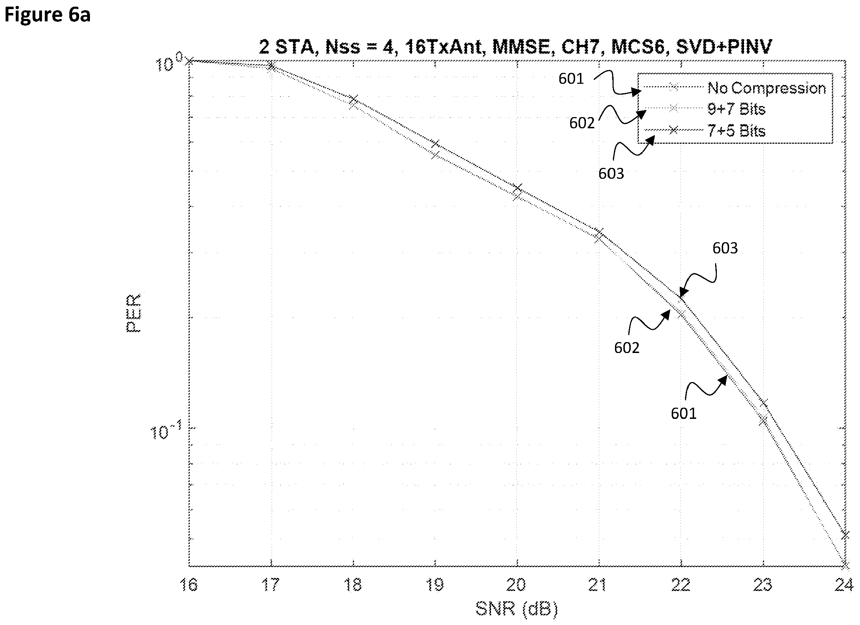

The results of the tests are given in Figures 6a, 6b, 7a, 7b, 7c, 8a and 8b.

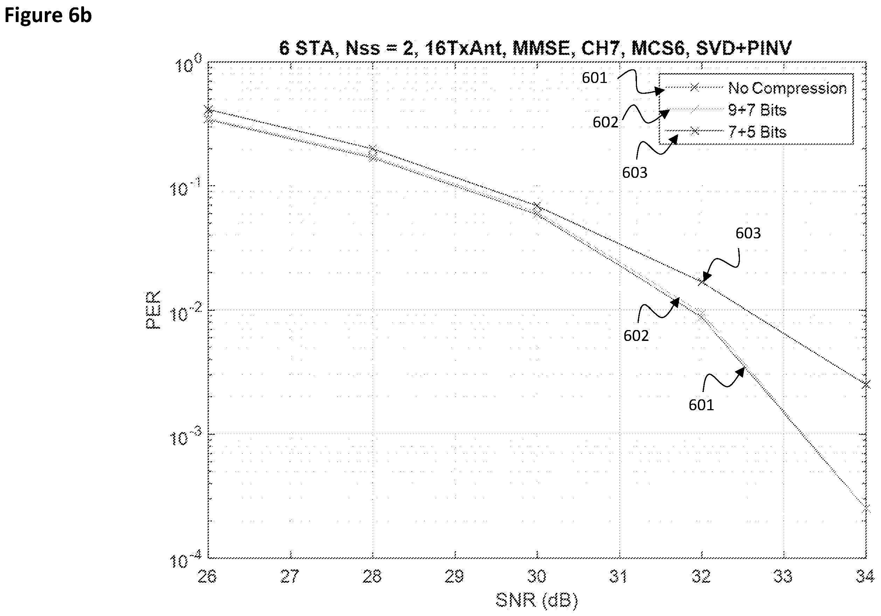

Figs. 6a and 6b show simulation results of the performance of IEEE 802.11ax codebook size for a number of spatial streams Nss ≤ 12. Graph 601 in both Figures 6a and 6b shows performance over SNR with no compression; graph 602 in both Figures 6a and 6b shows performance over SNR with 9+7 bits codebook size; and graph 603 in both Figures 6a and 6b shows performance over SNR with 7+5 bits codebook size.

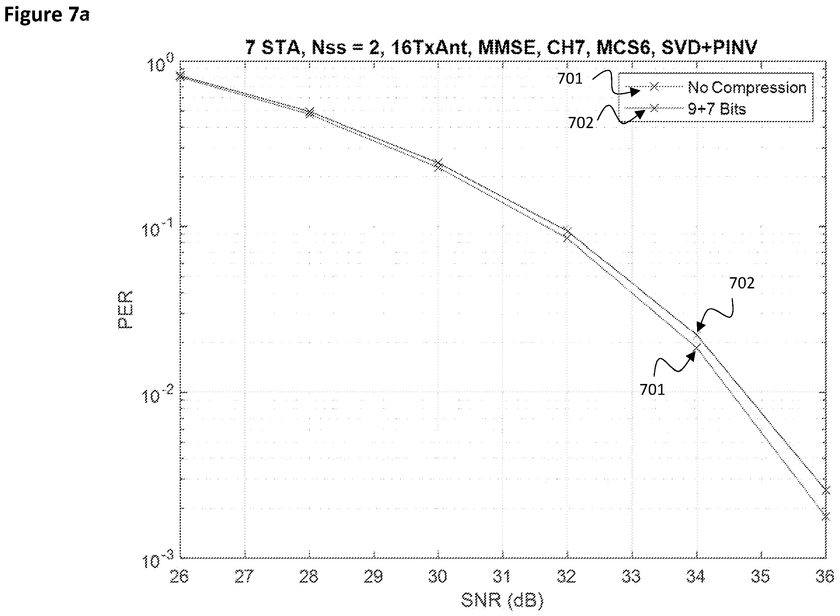

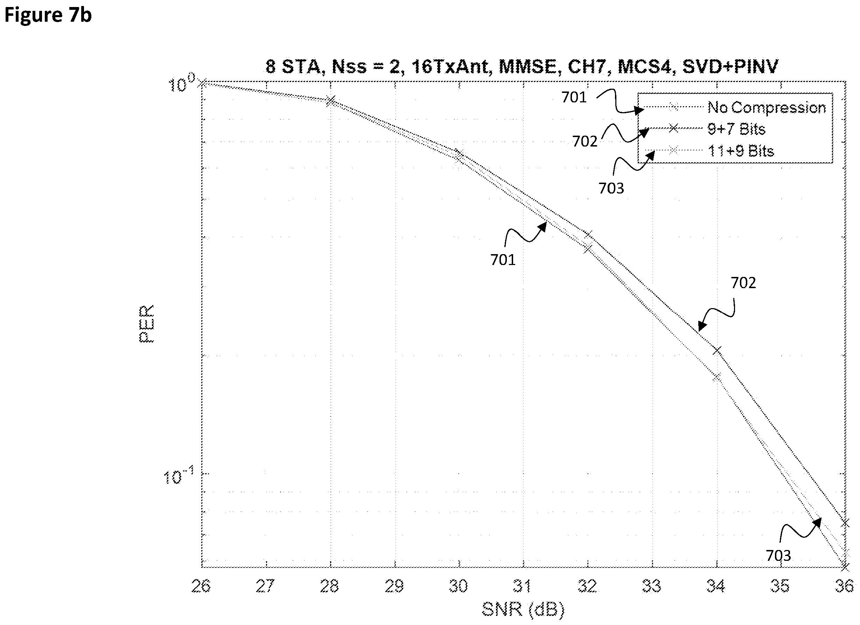

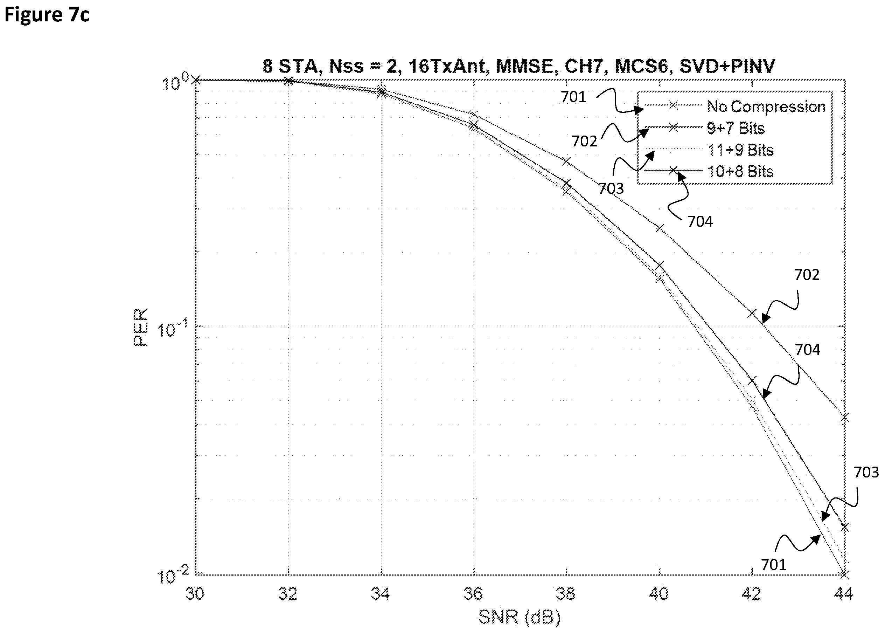

Figs. 7a, 7b and 7c show simulation results of the performance of IEEE 802.11ax codebook size for a number of spatial streams Nss > 12. Graph 701 in Figures 7a, 7b and 7c shows performance over SNR with no compression; graph 702 in Figures 7a, 7b and 7c shows performance over SNR with 9+7 bits codebook size; graph 703 in Figures 7b and 7c shows performance over SNR with 11+9 bits codebook size and graph 704 in Figure 7c shows performance over SNR with 10+8 bits codebook size.

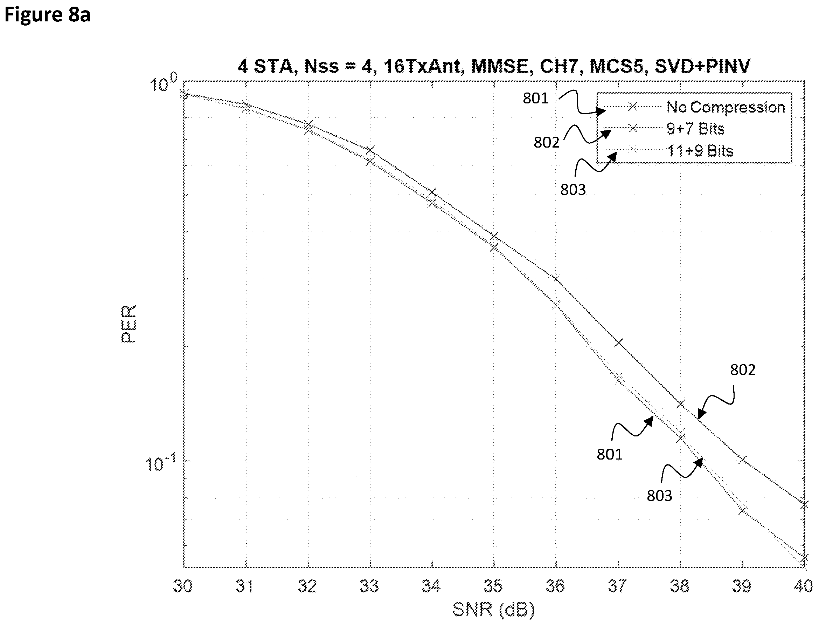

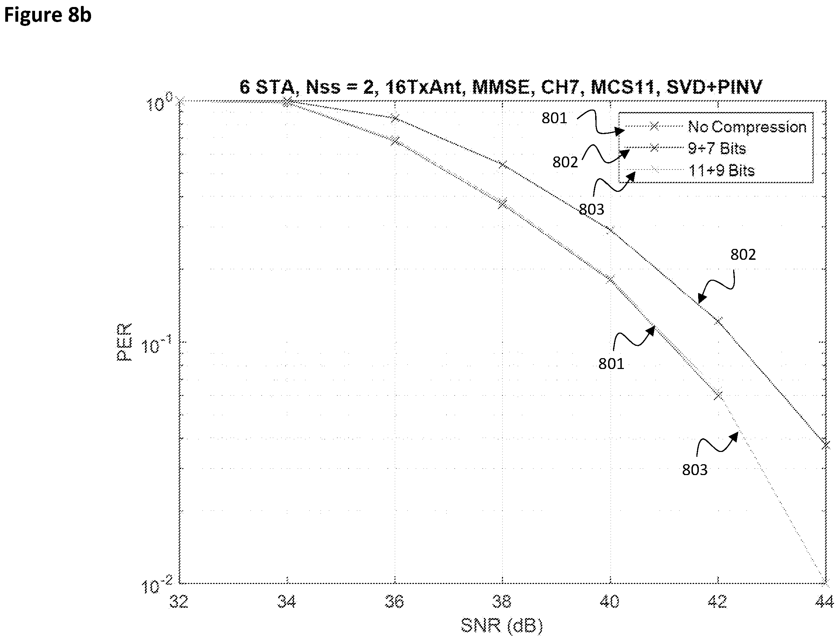

Figs. 8a and 8b show simulation results of the performance of IEEE 802.11ax codebook size for extreme cases. Graph 801 in both Figures 8a and 8b shows performance over SNR with no compression; graph 802 in both Figures 8a and 8b shows performance over SNR with 9+7 bits codebook size; and graph 803 in both Figures 8a and 8b shows performance over SNR with 11+9 bits codebook size.

From these Figures 6a, 6b, 7a, 7b, 7c, 8a and 8b, it can be seen that, for cases where the total number of streams is less or equal 12 (75% of Ntx), the codebook size of (9,7) bits provides no performance degradation. While in cases where the number of streams is larger than 12 or in extreme MCS case, a codebook of (9,7) degrades the performance by up to 1.8dB.

From the results it can also be seen that codebook size of (11,9) bits achieves no performance degradation in all the examined cases.

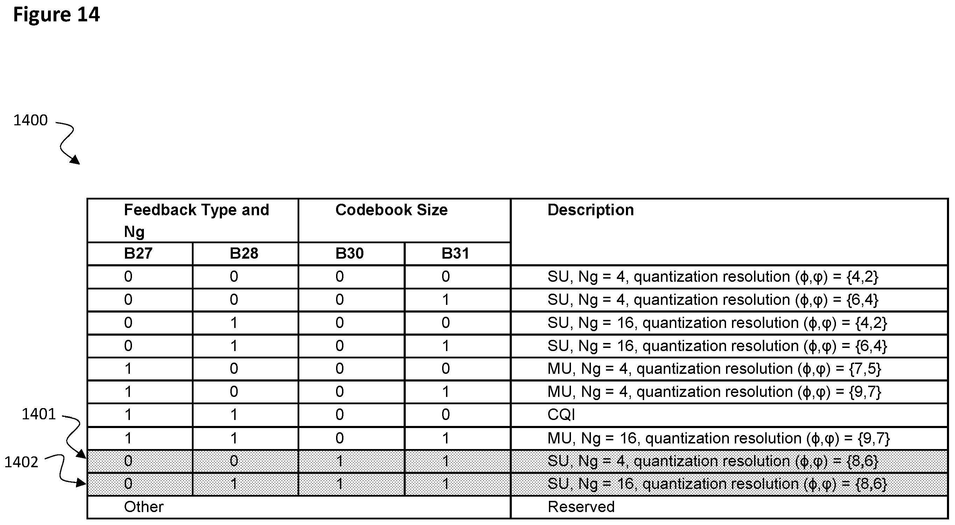

Figures 9a, 9b, 10a, 10b, 11, 12 and 13 relate to EHT STA Info Field in NDPA Frame for MU format. Figures 14 to 16 relate to EHT STA Info Field in NDPA Frame for SU format.

As mentioned before codebook size requires aligned indication in NDPA frame. Thus, embodiments of the disclosure present three options of EHT STA Info Field and also a specific indication per option:
- Option 1: Codebook size is extended by 1 bit (2 bits in total)
- Option 2: Codebook size is 1 bit, and new subfield "Codebook Type" of 1 bit is added
- Option 3: Codebook size is 1 bit

Fig. 9a shows an extended encoding table 900 for a STA Info Subfield for multi-user (MU) Format with extensions according to Option 1 in an embodiment of the disclosure.

According to Option 1, Codebook Size is extended to 2 bits. Feedback Type and Ng remains 2 bits, thus the two bits of Feedback Type and Ng subfield are denoted as B0 and B1. The two bits of Codebook Size are denoted as B0 and B1. In this case, an exemplary table 9-31a of IEEE 802.11ax standard will have the following form as shown in Figure 9a of an embodiment:

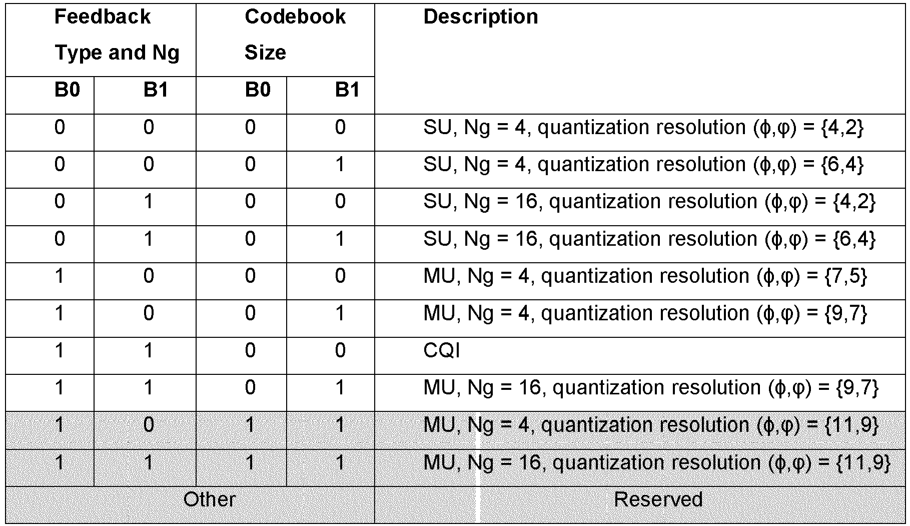

Extension lines 901, 902, 903 are included to indicate the cases of MU, Ng = 4, quantization resolution (ϕ,φ) = {11,9}, MU, Ng = 16, quantization resolution (ϕ,φ) = {11,9} and Reserved.

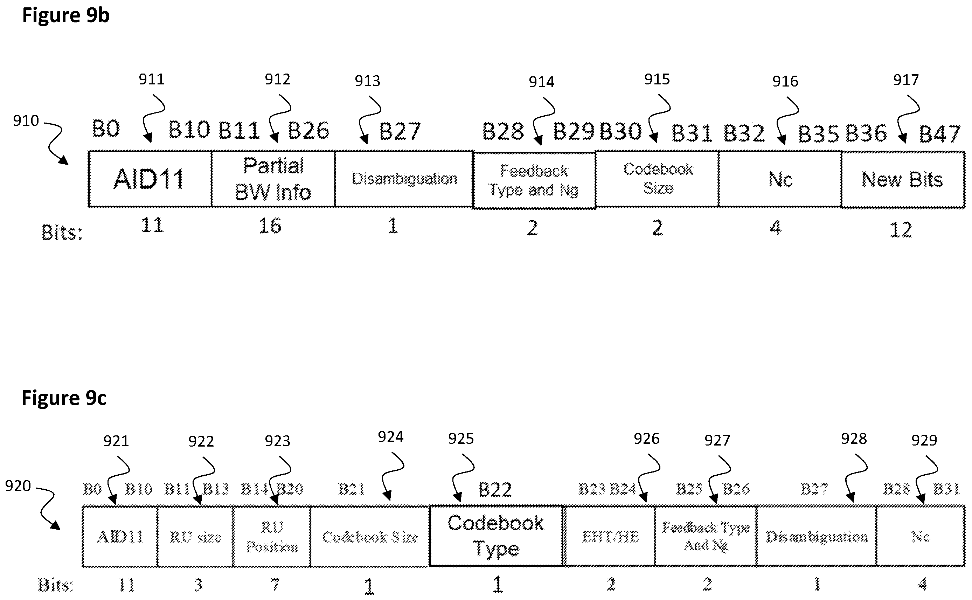

Fig. 9b shows a first example (Example 1) of a STA Info Subfield 910 for MU Format with extended Codebook size Field according to Option 1 in an embodiment of the disclosure.

The STA Info Subfield 910 according to Example 1 includes a 11bit AID11 subfield 911, a 16bit Partial BW Info subfield 912, a 1bit Disambiguation subfield 913, a 2bit Feedback Type And Ng subfield 914, a 2bit Codebook Size subfield 915, a 4bit Nc subfield 916 and a 12bit New Bits subfield 917.

According to Example 1, the STA Info Subfield 910 is extended by two additional bytes (see Fig. 9b), in this case B0-B1 of Feedback Type and Ng 914 correspond to B28-B29 and B0-B1 of Codebook Size 915 correspond B30-B31.

Fig. 9c shows a second example (Example 2) of a STA Info Subfield 920 for MU Format with extended Codebook size Field according to Option 1 in an embodiment of the disclosure.

The STA Info Subfield 920 according to Example 2 includes a 11bit AID11 subfield 921, a 3bit RU size subfield 922, a 7bit RU position subfield 923, a 1bit Codebook Size subfield 924, a 1bit Codebook Type subfield 925, a 2 bit EHT/HE subfield 926, a 2bit Feedback Type And Ng subfield 927, a 1 bit Disambiguation subfield 928 and a 4bit Nc subfield 929.

According to Example 2, the STA Info Subfield 920 remains of 4 Bytes with updated subfields sizes (see Fig. 9c), in this case B0-B1 of Feedback Type and Ng 927 corresponds to B25-B26 and B0-B1 of Codebook Size 924 corresponds to B21-B22.

Fig. 10a shows an extended encoding table 1000 for a STA Info Subfield for MU Format with extensions according to Option 2 in an embodiment of the disclosure, wherein Feedback Type and Ng remains 2 bits and two bits of Feedback Type and Ng subfield are denoted as B0 and B1. A bit Codebook Size is denoted as B0.

If Codebook Type is '0' - an exemplary Table 9-31a is identical to the Table 9-31a according to IEEE 802.11ax standard. If Codebook Type is '1' - an exemplary Table 9-31a is given by the following table as also shown in Figure 10a:

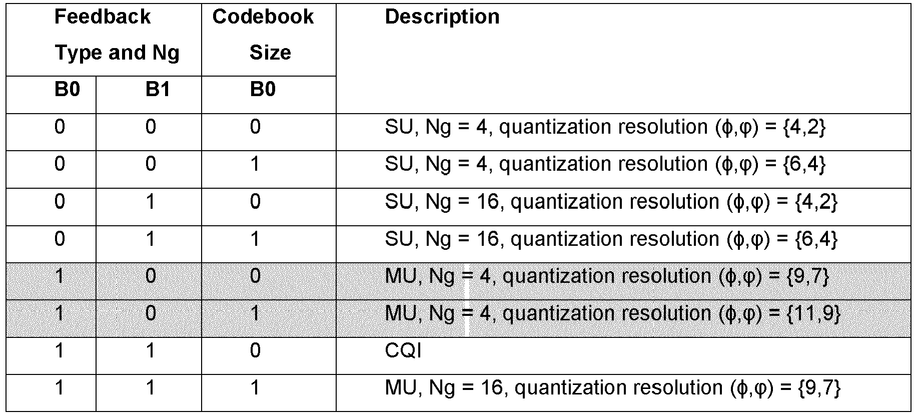

Extension lines 1001 and 1002 as shown in figure 1000 are included to indicate the cases of MU, Ng = 4, quantization resolution (ϕ,φ) = {9,7} and MU, Ng = 4, quantization resolution (ϕ,φ) = {11,9}.

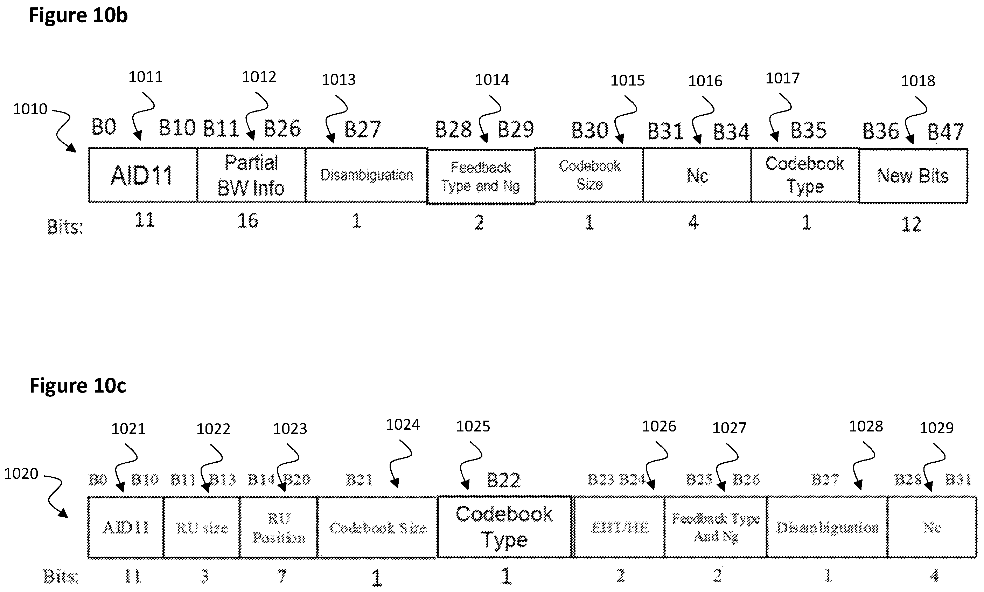

Fig. 10b shows a first Example (Example 1) of a STA Info Subfield 1010 for MU Format with Codebook Size and Codebook Type Subfields according to Option 2 in an embodiment of the disclosure.

The STA Info Subfield 1010 according to Example 1 includes a 11 bitAID11 subfield 1011, a 16bit Partial BW Info subfield 1012, a 1bit Disambiguation subfield 1013, a 2bit Feedback Type And Ng subfield 1014, a 1bit Codebook Size subfield 1015, a 4bit Nc subfield 1016, a 1bit Codebook Type subfield 1017 and a 12bit New Bits subfield 917.

According to Example 1, STA Info Field is extended by two additional bytes (see Fig. 10b), in this case B0-B1 of Feedback Type and Ng correspond to B28-B29, Codebook Size is B30 and Codebook Type is B35.

Fig. 10c shows a second Example (Example 2) of a STA Info Subfield 1020 for MU Format with Codebook Size and Codebook Type Subfields according to Option 2 in an embodiment of the disclosure.

The STA Info Subfield 1020 according to Example 2 includes a 11bit AID11 subfield 1021, a 3bit RU size subfield 1022, a 7bit RU position subfield 1023, a 1bit Codebook Size subfield 1024, a 1bit Codebook Type subfield 1025, a 2 bit EHT/HE subfield 1026, a 2bit Feedback Type And Ng subfield 1027, a 1 bit Disambiguation subfield 1028 and a 4bit Nc subfield 1029.

According to Example 2, STA Info Field remains of 4 Bytes with updated subfields sizes (see Fig. 10c) and new Codebook Type Subfield, in this case B0-B1 of Feedback Type and Ng correspond to B25-B26 and B0-B1 of Codebook Size correspond to B21-B22.

For Option 3, STA Info Subfield is identical to IEEE 802.11ax standard (i.e. the table 9-61b). Under reference to figures 11, 12 and 13, variants of Option 3 will be further described below.

Fig. 11 shows an extended encoding table 1100 for a STA Info Subfield for MU Format with extensions according to Option 3a in an embodiment of the disclosure.

According to the embodiment of Option 3a, indication of Codebook Size (7,5) is replaced by indication of (11,9) and preserve indication of (9,7). In this option, an exemplary table 9-31a is given below (see also Fig. 11):

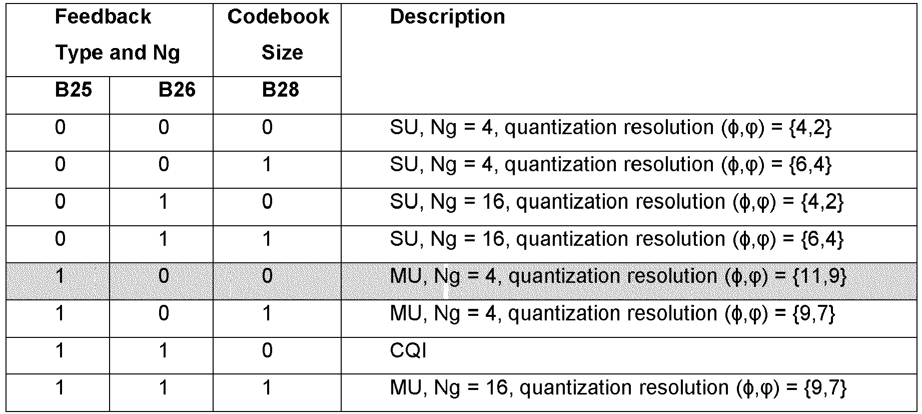

Extension line 1101 as shown in Fig. 11 is included to indicate the cases of MU, Ng = 4, quantization resolution (ϕ,φ) = {11,9}.

Fig. 12 shows an extended encoding table 1200 for a STA Info Subfield for MU Format with extensions according to Option 3b in an embodiment of the disclosure.

According to the embodiment of Option 3b, indication of Codebook Size (7,5) is replaced by indication of (11,9) and preserve ascending order of codebook size. In this option an exemplary table 9-31a is given as shown below (see also Fig. 12):

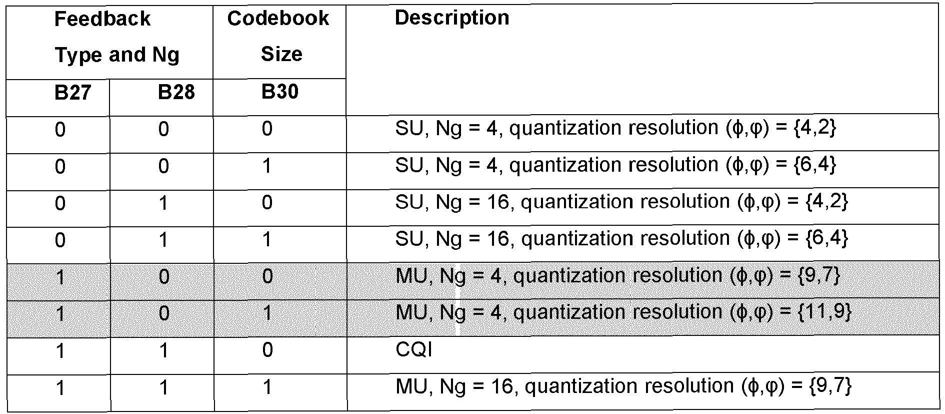

Extension lines 1201 and 1202 as shown in Fig. 12 are included to indicate the cases of MU, Ng = 4, quantization resolution (ϕ,φ) = {9,7} and MU, Ng = 4, quantization resolution (ϕ,φ) = {11,9}.

Fig. 13 shows an extended encoding table 1300 for a STA Info Subfield for MU Format with extensions according to Option 3c in an embodiment of the disclosure.

According to the embodiment of Option 3c, a conditional codebook size is applied: if Nr (number of rows in precoder matrix, given by number of STS in NDP packet) is larger than 8 use codebook size of (11,9) otherwise use codebook size of (7,5). In this option an exemplary table 9-31a is given as shown below (see also Fig. 13):

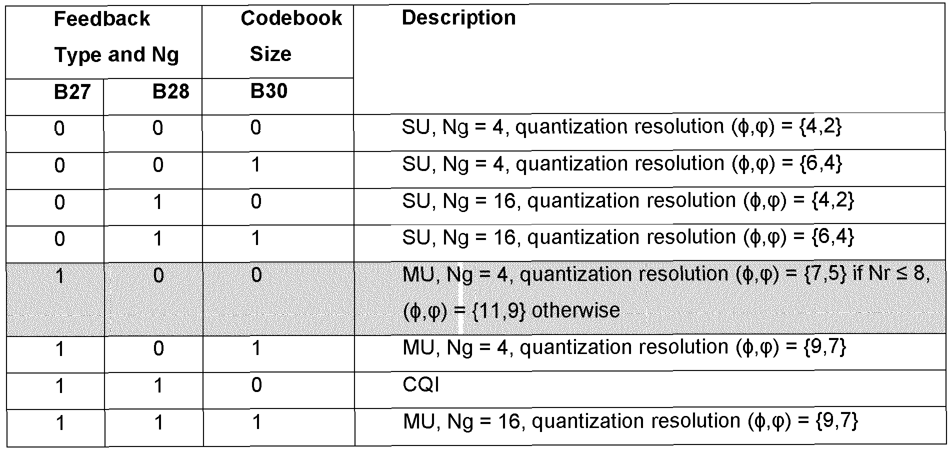

Extension line 1301 as shown in Fig. 13 is included to indicate the conditional codebook size: MU, Ng = 4, quantization resolution (ϕ,φ) = {7,5} if Nr ≤ 8, (ϕ,φ) = {9,7} otherwise.

Fig. 14 shows an extended encoding table 1400 for a STA Info Subfield for single user (SU) Format with extensions according to Option 1 of the disclosure.

Here the table 9-31a extension is defined for SU feedback format with additional codebook size according to Option 1 mentioned above:

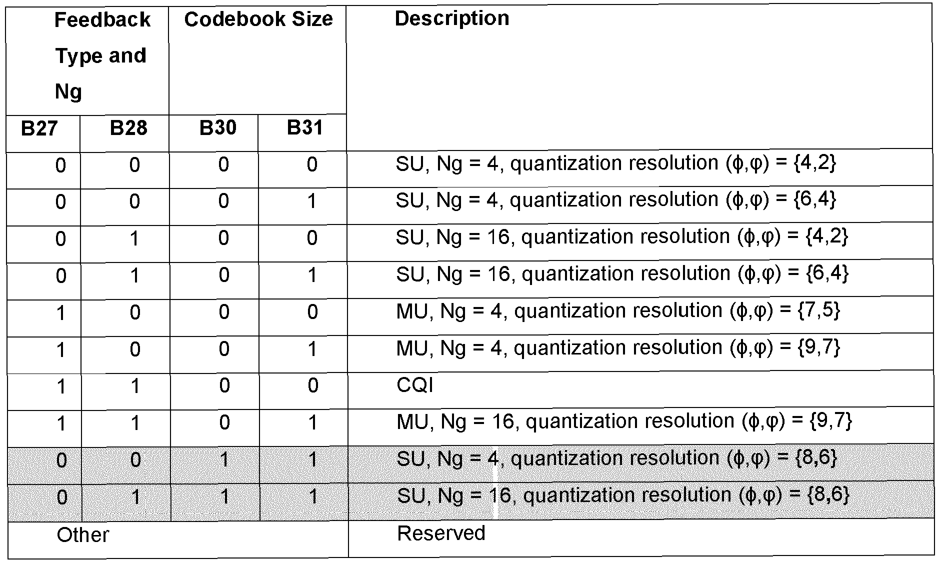

Extension lines 1401 and 1402 as shown in Fig. 14 are included to indicate the cases of SU, Ng = 4, quantization resolution (ϕ,φ) = {8,6} and SU, Ng = 16, quantization resolution (ϕ,φ) = {8,6}.

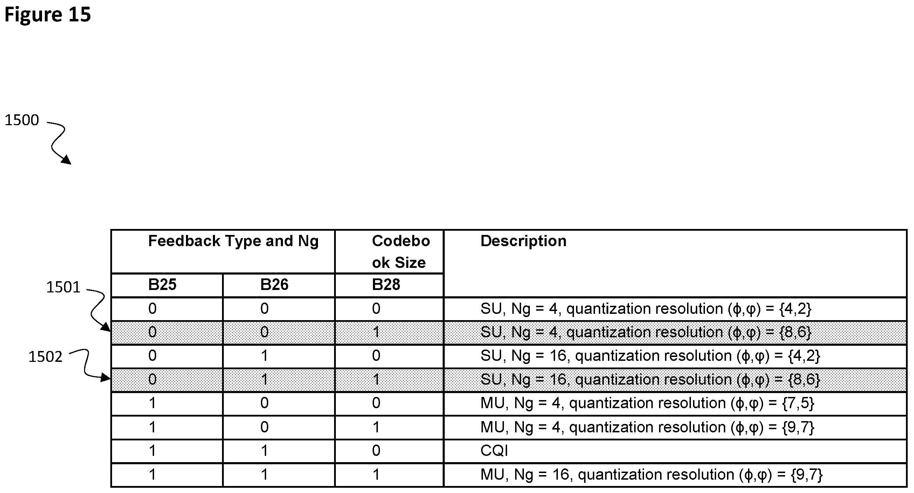

Fig. 15 shows an extended encoding table 1500 for a STA Info Subfield for SU Format with extensions according to Option 2 of the disclosure.

If Codebook Type bit is '0', table 9-31a of IEEE 802.11ax will be used; otherwise an exemplary table 9-31a will be as follows (see Figure 15):

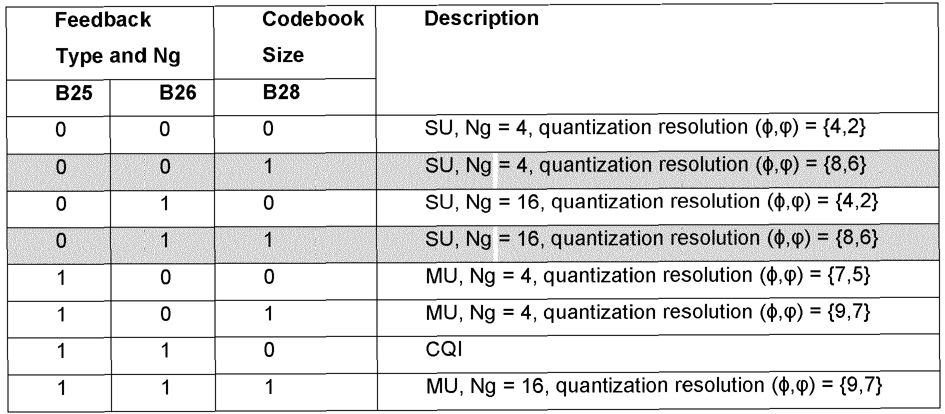

Extension lines 1501 and 1502 as shown in Fig. 15 are included to indicate the cases of SU, Ng = 4, quantization resolution (ϕ,φ) = {8,6} and SU, Ng = 16, quantization resolution (ϕ,φ) = {8,6}.

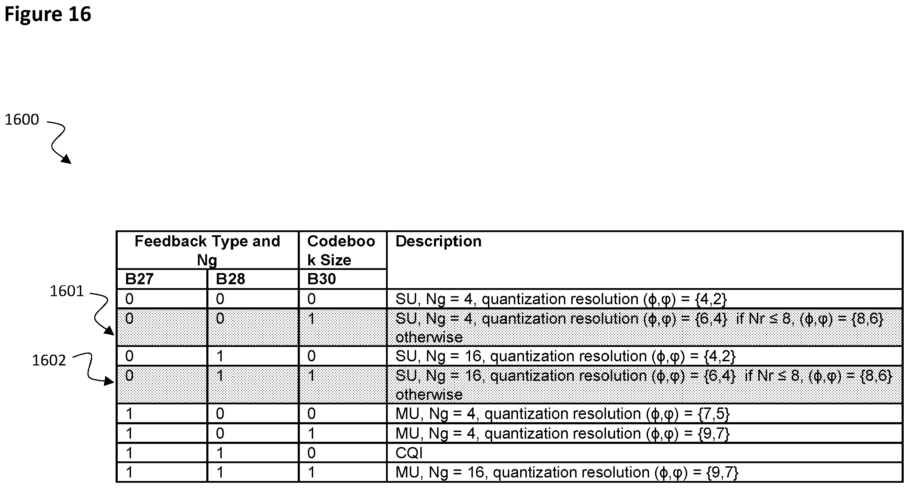

Fig. 16 shows an extended encoding table 1600 for a STA Info Subfield for SU Format with extensions according to Option 3 of the disclosure.

For Options 3a-b, table 9-31 is used as illustrated in Figure 15.

For Option 3c, the following table 9-31a will be used (see Figure 16):

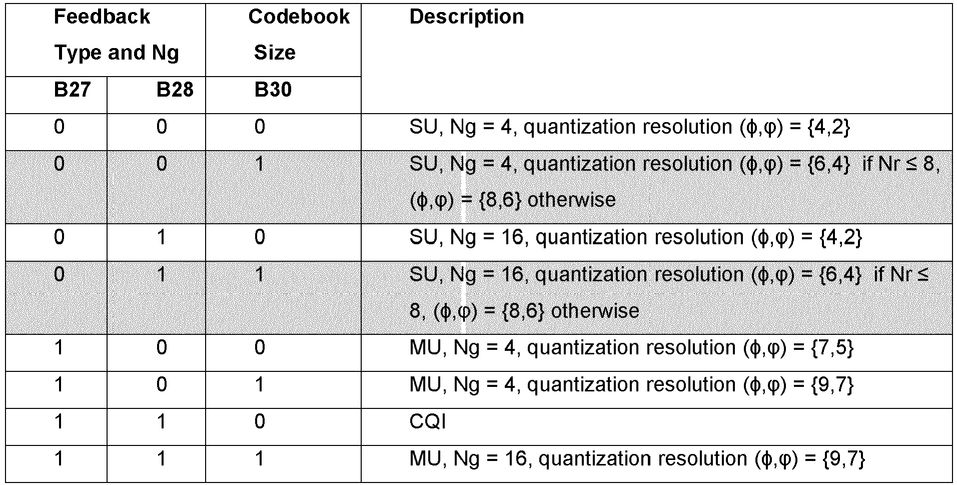

Extension lines 1601 and 1602 as shown in Fig. 16 are included to indicate the conditional codebook sizes according to cases of SU, Ng = 4, quantization resolution (ϕ,φ) = {6,4} if Nr ≤ 8, (ϕ,φ) = {8,6} otherwise and SU, Ng = 16, quantization resolution (ϕ,φ) = {6,4} if Nr ≤ 8, (ϕ,φ) = {8,6} otherwise.

MIMO Control Field contains indication parameters for transmitted compressed beamforming report as depicted in Figure 4 above. Embodiments of the disclosure provide three options for changes in MIMO Control Field of IEEE 802.11be:
- Option 1: MIMO Control Field is extended by one byte (8 bytes in total) where Codebook Information is extended by one bit
- Option 2: MIMO Control Field is extended by one byte (8 bytes in total), Codebook Information remains 1 bit and additional special indication bit is defined
- Option 3: MIMO Control Field remains identical to IEEE 802.11ax

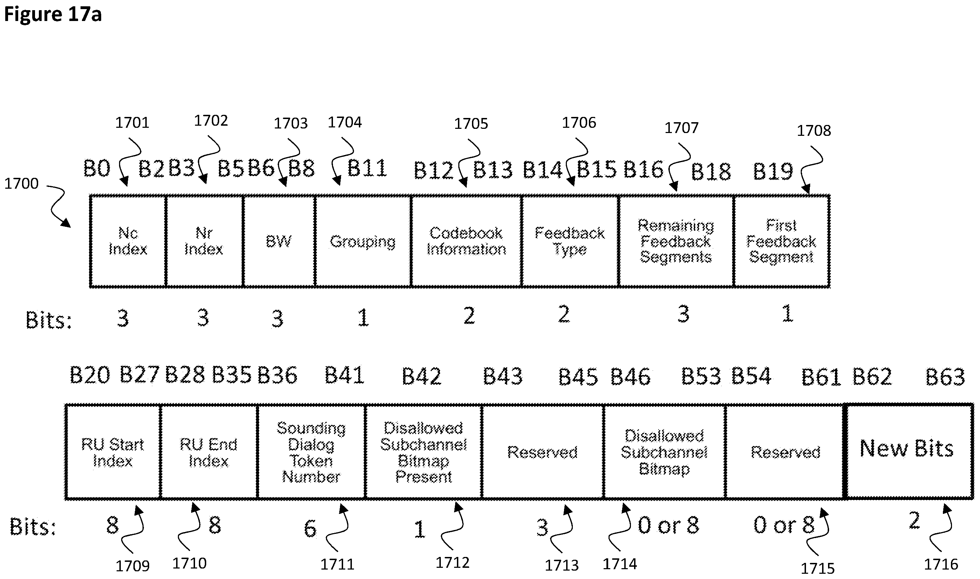

In the case of Option 1, MIMO Control Field will be of the form shown in Fig. 17a:
Fig. 17a shows an exemplary MIMO Control Field 1700 for MU Format with extensions according to Option 1 of an embodiment.

The MIMO Control Field 1700 includes a 3bit Nc Index subfield 1701, a 3bit Nr Index subfield 1702, a 3bit BW subfield 1703, a 1bit Grouping subfield 1704, a 2bit Codebook Information subfield 1705, a 2bit Feedback Type subfield 1706, a 3bit Remaining Feedback Segments subfield 1707, a 1bit First Feedback Segment subfield 1708, a 8bit RU Start Index subfield 1709, a 8bit RU End Index subfield 1710, a 6bit Sounding Dialog Token Number subfield 1711, a 1bit Disallowed Subchannel Bitmap Present subfield 1712, a 3bit Reserved subfield 1713, a 0 or 8bit Disallowed Subchannel Bitmap subfield 1714, a 0 or 8bit Reserved subfield 1715 and a 2bit New Bits subfield 1716.

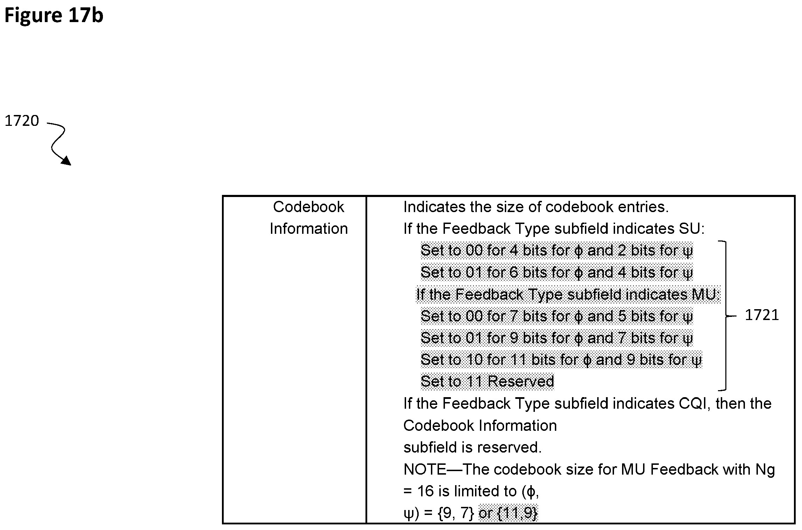

Fig. 17b shows an extended encoding table 1720 for a MIMO Control Field for MU Format with extended Codebook Information Field according to Option 1 of an embodiment. And the Codebook Information entry of table 9-93a is given by the table below (see Fig. 17b):

| | |
|---|---|
| Codebook Information | Indicates the size of codebook entries. |
| | If the Feedback Type subfield indicates SU: |
| | Set to 00 for 4 bits for ϕ and 2 bits for ψ |
| | Set to 01 for 6 bits for ϕ and 4 bits for ψ |
| | If the Feedback Type subfield indicates MU: |
| | Set to 00 for 7 bits for ϕ and 5 bits for ψ |
| | Set to 01 for 9 bits for ϕ and 7 bits for ψ |
| | Set to 10 for 11 bits for ϕ and 9 bits for ψ |
| | Set to 11 Reserved |
| | If the Feedback Type subfield indicates CQl, then the Codebook Information subfield is reserved. |
| | NOTE-The codebook size for MU Feedback with Ng = 16 is limited to (*ϕ*, ψ) = {9, 7} or {11,9} |

Extension section 1721 as shown in figure 17b is included to indicate the new settings:
Set to 00 for 4 bits for ϕ and 2 bits for ψ
Set to 01 for 6 bits for ϕ and 4 bits for ψ
If the Feedback Type subfield indicates MU:
Set to 00 for 7 bits for ϕ and 5 bits for ψ
Set to 01 for 9 bits for ϕ and 7 bits for ψ
Set to 10 for 11 bits for ϕ and 9 bits for ψ
Set to 11 Reserved.

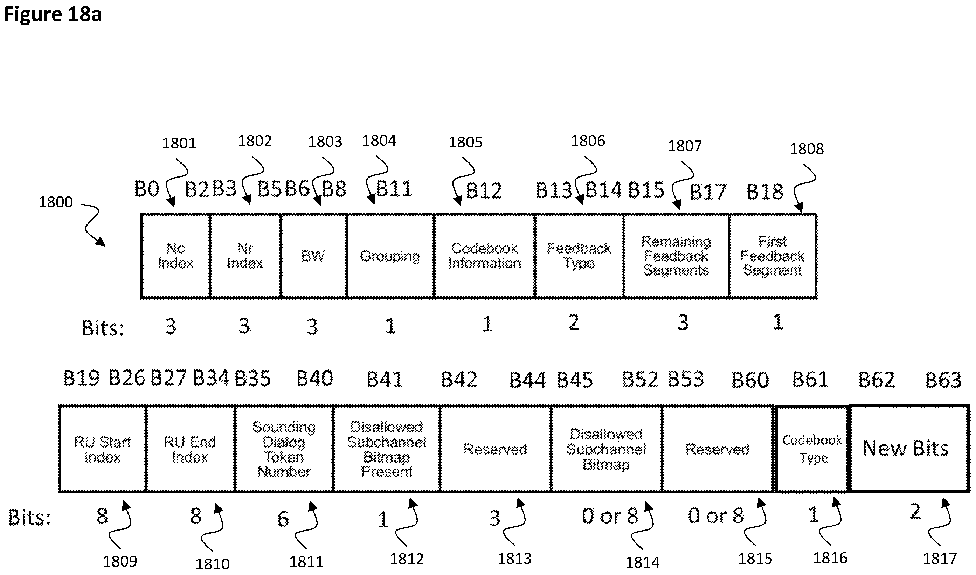

In the case of Option 2, MIMO Control Field will be as shown in Fig. 18a:
Fig. 18a shows an exemplary MIMO Control Field 1800 for MU Format with extensions according to Option 2 of an embodiment.

The MIMO Control Field 1800 includes a 3bit Nc Index subfield 1801, a 3bit Nr Index subfield 1802, a 3bit BW subfield 1803, a 1bit Grouping subfield 1804, a 1bit Codebook Information subfield 1805, a 2bit Feedback Type subfield 1806, a 3bit Remaining Feedback Segments subfield 1807, a 1bit First Feedback Segment subfield 1808, a 8bit RU Start Index subfield 1809, a 8bit RU End Index subfield 1810, a 6bit Sounding Dialog Token Number subfield 1811, a 1bit Disallowed Subchannel Bitmap Present subfield 1812, a 3bit Reserved subfield 1813, a 0 or 8bit Disallowed Subchannel Bitmap subfield 1814, a 0 or 8bit Reserved subfield 1815, a 1bit Codebook Type subfield 1816 and a 2bit New Bits subfield 1817.

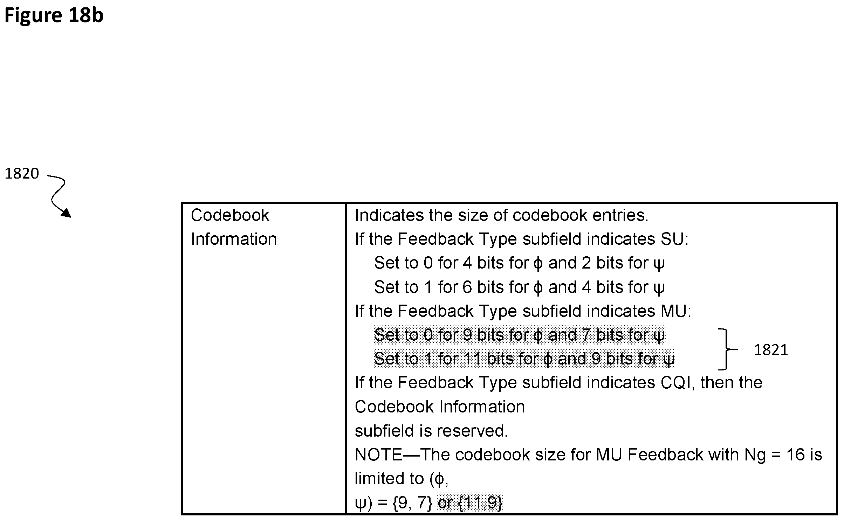

Fig. 18b shows an extended encoding table 1820 for a MIMO Control Field for MU Format with extended Codebook Information Field according to Option 2 of the embodiment.

For Option 2, if Codebook Type is '0', the Codebook Information entry of table 9-93a is identical to that according to IEEE 802.11ax. Otherwise, an exemplary Codebook Information entry of table 9-93a is given as shown below (see Fig. 18b):

| | |
|---|---|
| Codebook Information | Indicates the size of codebook entries. |
| | If the Feedback Type subfield indicates SU: |
| | Set to 0 for 4 bits for ϕ and 2 bits for ψ |
| | Set to 1 for 6 bits for ϕ and 4 bits for ψ |
| | If the Feedback Type subfield indicates MU: |
| | Set to 0 for 9 bits for ϕ and 7 bits for ψ |
| | Set to 1 for 11 bits for ϕ and 9 bits for ψ |
| | If the Feedback Type subfield indicates CQl, then the Codebook Information subfield is reserved. |
| | NOTE-The codebook size for MU Feedback with Ng = 16 is limited to (ϕ, ψ) = {9, 7} or {11,9} |

Extension section 1821 as shown in Fig. 18b is included to indicate the new settings:
Set to 0 for 9 bits for ϕ and 7 bits for ψ
Set to 1 for 11 bits for ϕ and 9 bits for ψ.

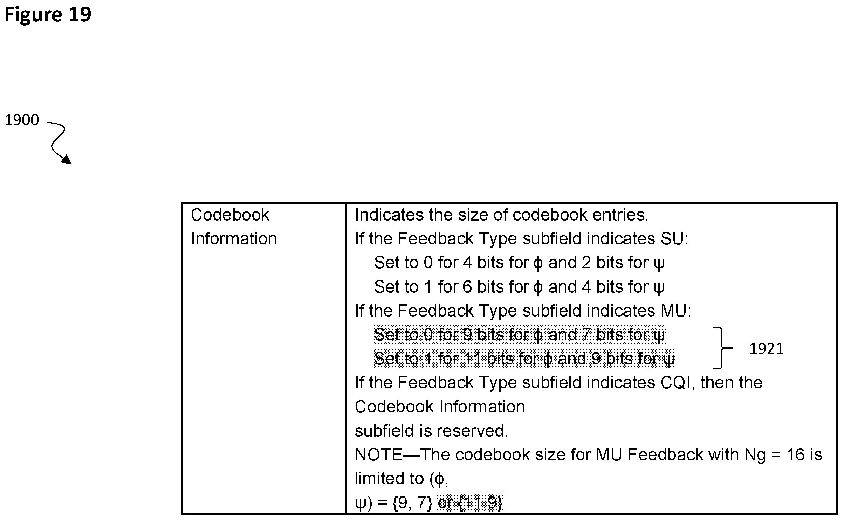

Fig. 19 shows an extended encoding table 1900 for a MIMO Control Field for MU Format with extended Codebook Information Field according to Option 3a in an embodiment of the disclosure.

According to Option 3a, a codebook size of (7,5) is replaced by (11,9) and a Codebook Information entry of table 9-93a is defined as shown below (see Fig. 19):

| | |
|---|---|
| Codebook Information | Indicates the size of codebook entries. |
| | If the Feedback Type subfield indicates SU: |
| | Set to 0 for 4 bits for ϕ and 2 bits for ψ |
| | Set to 1 for 6 bits for ϕ and 4 bits for ψ |
| | If the Feedback Type subfield indicates MU: |
| | Set to 0 for 9 bits for ϕ and 7 bits for ψ |
| | Set to 1 for 11 bits for ϕ and 9 bits for ψ |
| | If the Feedback Type subfield indicates CQI, then the Codebook Information subfield is reserved. |
| | NOTE-The codebook size for MU Feedback with Ng = 16 is limited to (*ϕ*, ψ) = {9, 7} or {11,9} |

Extension section 1921 as shown in Fig. 19 is included to indicate the new settings:
Set to 0 for 9 bits for ϕ and 7 bits for ψ
Set to 1 for 11 bits for ϕ and 9 bits for ψ.

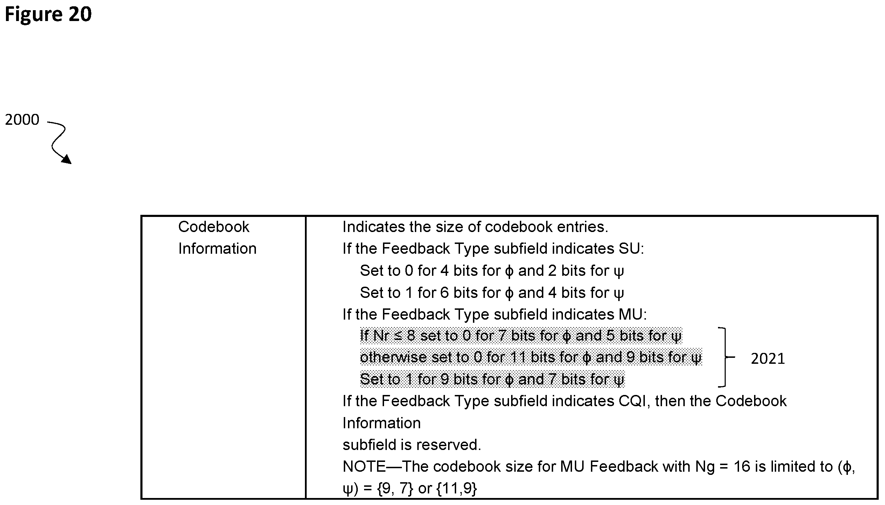

Fig. 20 shows an extended encoding table 2000 for a MIMO Control Field for MU Format with extended Codebook Information Field according to Option 3b in an embodiment of the disclosure.

According to Option 3b (Conditional Codebook size), a Codebook Information entry of table 9-93a is set as shown below (see Fig. 20):

| | |
|---|---|
| Codebook Information | Indicates the size of codebook entries. |
| | If the Feedback Type subfield indicates SU: |
| | Set to 0 for 4 bits for ϕ and 2 bits for ψ |
| | Set to 1 for 6 bits for ϕ and 4 bits for ψ |
| | If the Feedback Type subfield indicates MU: |
| | If Nr ≤ 8 set to 0 for 7 bits for ϕ and 5 bits for ψ |
| | otherwise set to 0 for 11 bits for ϕ and 9 bits for ψ |
| | Set to 1 for 9 bits for ϕ and 7 bits for ψ |
| | If the Feedback Type subfield indicates CQl, then the Codebook Information subfield is reserved. |
| | NOTE-The codebook size for MU Feedback with Ng = 16 is limited to (φ, ψ) = {9, 7} or {11,9} |

Extension section 2021 as shown in Fig. 20 is included to indicate the new settings:
If Nr ≤ 8 set to 0 for 7 bits for ϕ and 5 bits for ψ
otherwise set to 0 for 11 bits for ϕ and 9 bits for ψ
Set to 1 for 9 bits for ϕ and 7 bits for ψ.

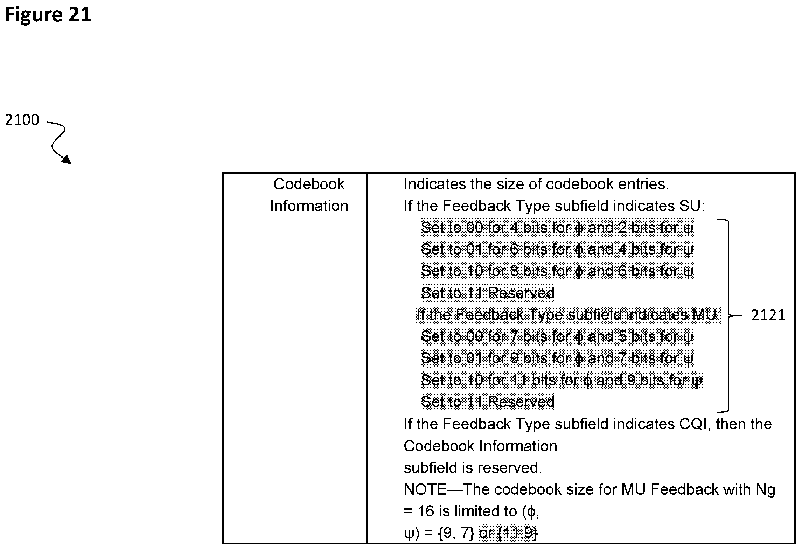

Fig. 21 shows an extended encoding table 2100 for a MIMO Control Field for single user (SU) Format with extended Codebook Information Field according to Option 1 in an embodiment of the disclosure.

According to Option 1, Codebook Information Entry in Table 9-93a is set as follows (see Fig. 21):

| | |
|---|---|
| Codebook Information | Indicates the size of codebook entries. |
| | If the Feedback Type subfield indicates SU: |
| | Set to 00 for 4 bits for ϕ and 2 bits for ψ |
| | Set to 01 for 6 bits for ϕ and 4 bits for ψ |
| | Set to 10 for 8 bits for ϕ and 6 bits for ψ |
| | Set to 11 Reserved |
| | If the Feedback Type subfield indicates MU: |
| | Set to 00 for 7 bits for ϕ and 5 bits for ψ |
| | Set to 01 for 9 bits for ϕ and 7 bits for ψ |
| | Set to 10 for 11 bits for ϕ and 9 bits for ψ |
| | Set to 11 Reserved |
| | If the Feedback Type subfield indicates CQI, then the Codebook Information subfield is reserved. |
| | NOTE-The codebook size for MU Feedback with Ng = 16 is limited to (*ϕ*, ψ) = {9, 7} or {11,9} |

Extension section 2121 as shown in Fig. 21 is included to indicate the new settings:
Set to 00 for 4 bits for ϕ and 2 bits for ψ
Set to 01 for 6 bits for ϕ and 4 bits for ψ
Set to 10 for 8 bits for ϕ and 6 bits for ψ
Set to 11 Reserved
If the Feedback Type subfield indicates MU:
Set to 00 for 7 bits for ϕ and 5 bits for ψ
Set to 01 for 9 bits for ϕ and 7 bits for ψ
Set to 10 for 11 bits for ϕ and 9 bits for ψ
Set to 11 Reserved.

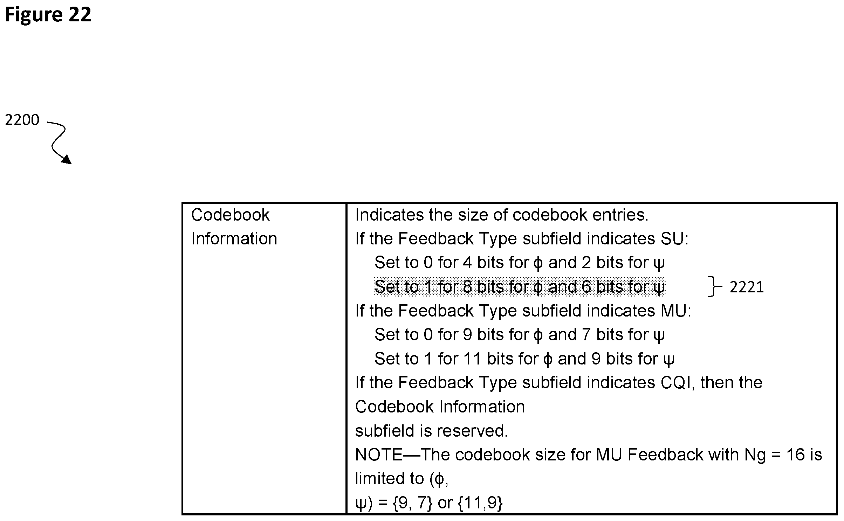

Fig. 22 shows an extended encoding table 2200 for a MIMO Control Field for SU Format with extended Codebook Information Field according to Option 2 and Option 3a in embodiments of the disclosure.

According to Option 2, if Codebook Type bit is set to '0', Codebook Information in Table 9-93a according to IEEE 802.11ax definition will be used; otherwise an exemplary Codebook Information Entry in Table 9-93a is set as follows (see Fig. 22):

| | |
|---|---|
| Codebook Information | Indicates the size of codebook entries. |
| | If the Feedback Type subfield indicates SU: |
| | Set to 0 for 4 bits for ϕ and 2 bits for ψ |
| | Set to 1 for 8 bits for ϕ and 6 bits for ψ |
| | If the Feedback Type subfield indicates MU: |
| | Set to 0 for 9 bits for ϕ and 7 bits for ψ |
| | Set to 1 for 11 bits for ϕ and 9 bits for ψ |
| | If the Feedback Type subfield indicates CQI, then the Codebook Information subfield is reserved. |
| | NOTE-The codebook size for MU Feedback with Ng = 16 is limited to (ϕ, ψ) = {9, 7} or {11,9} |

Extension section 2221 as shown in Fig. 22 is included to indicate the new settings:
Set to 1 for 8 bits for ϕ and 6 bits for ψ.

According to Option 3a of an embodiment, the extended encoding table 2200 in Fig. 22 can be used for Codebook Size definition in Table 9-93a.

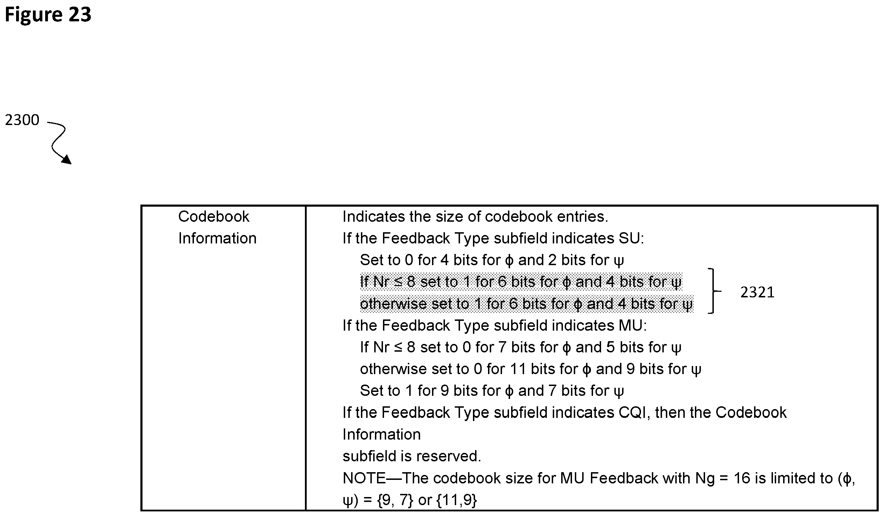

Fig. 23 shows an extended encoding table 2300 for a MIMO Control Field for SU Format with extended Codebook Information Field according to Option 3b in an embodiment of the disclosure.

According to Option 3b, the extended encoding table 2300 in Fig. 23 can be used for Codebook Size definition in Table 9-93a as follows:

| | |
|---|---|
| Codebook Information | Indicates the size of codebook entries. |
| | If the Feedback Type subfield indicates SU: |
| | Set to 0 for 4 bits for ϕ and 2 bits for ψ |
| | If Nr ≤ 8 set to 1 for 6 bits for ϕ and 4 bits for ψ |
| | otherwise set to 1 for 6 bits for ϕ and 4 bits for ψ |
| | If the Feedback Type subfield indicates MU: |
| | If Nr ≤ 8 set to 0 for 7 bits for ϕ and 5 bits for ψ |
| | otherwise set to 0 for 11 bits for ϕ and 9 bits for ψ |
| | Set to 1 for 9 bits for ϕ and 7 bits for ψ |
| | If the Feedback Type subfield indicates CQI, then the Codebook Information subfield is reserved. |
| | NOTE-The codebook size for MU Feedback with Ng = 16 is limited to (φ, ψ) = {9, 7} or {11,9} |

Extension section 2321 as shown in Fig. 23 is included to indicate the new settings:
If Nr ≤ 8 set to 1 for 6 bits for ϕ and 4 bits for ψ
otherwise set to 1 for 6 bits for ϕ and 4 bits for ψ.

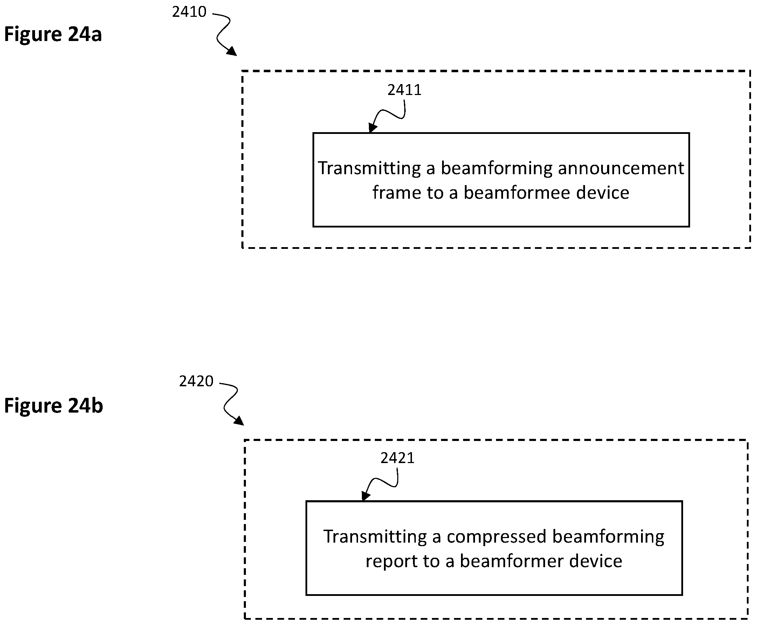

Fig. 24a shows a schematic diagram illustrating a method 2410 for announcing beamforming in a beamforming communication system according to an embodiment.

The method 2410 for announcing beamforming in a multi-user beamforming communication system comprises a step 2411 of transmitting a beamforming announcement frame, in particular a Null Data Packet Announcement, NDPA, frame to a beamformee device of the multi-user beamforming communication system, wherein the beamforming announcement frame comprises a station information subfield, STA Info Subfield, according to a second WiFi scheme, in particular 802.11be WiFi, supporting a larger MIMO size for beamforming than a first WiFi scheme, in particular 802.11ax WiFi, wherein the STA Info Subfield according to the second WiFi scheme comprises a new option to indicate higher bit numbers (*ϕ*, *ψ*) of angle information for a compressed beamforming report than a STA Info Subfield according to the first WiFi scheme.

The method 2410 may correspond to the functionality of the beamformer device 110 described above with respect to Figures 1 to 23.

Fig. 24b shows a schematic diagram illustrating a method 2420 for reporting a compressed beamforming report in a beamforming communication system according to an embodiment.

The method 2420 for reporting a compressed beamforming report responsive to a beamforming announcement of a beamformer device in a multi-user beamforming communication system comprises a step 2421 of transmitting a compressed beamforming report to the beamformer device of the multi-user beamforming communication system responsive to the beamforming announcement frame, in particular a Null Data Packet Announcement, NDPA, frame received from the beamformer device, wherein the compressed beamforming report comprises a MIMO Control Field according to a second WiFi scheme, in particular 802.11be WiFi, supporting a larger MIMO size for beamforming than a first WiFi scheme, in particular 802.11ax WiFi, wherein the MIMO Control Field according to the second WiFi scheme comprises a new option to indicate higher bit numbers (*ϕ*, *ψ*) of angle information for the compressed beamforming report than a MIMO Control Field according to the first WiFi scheme.

The method 2420 may correspond to the functionality of the beamformee device 120 described above with respect to Figures 1 to 23.

The present disclosure also supports a computer program product including computer executable code or computer executable instructions that, when executed, causes at least one computer to execute the performing and computing steps described herein, in particular the methods and procedures described above. Such a computer program product may include a readable non-transitory storage medium storing program code thereon for use by a computer. The program code may perform the processing and computing steps described herein, in particular the methods and procedures described above.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims, the invention may be practiced otherwise than as specifically described herein.

## Claims

1. A beamformer device (110) for announcing beamforming in a multi-user beamforming communication system, wherein the beamformer device (110) is configured to:
transmit a beamforming announcement frame, in particular a Null Data Packet Announcement, NDPA, frame (111) to a beamformee device (120) of the multi-user beamforming communication system,
wherein the beamforming announcement frame comprises a station information subfield, STA Info Subfield, according to a second WiFi scheme supporting a larger MIMO size for beamforming than a first WiFi scheme,
wherein the STA Info Subfield according to the second WiFi scheme comprises a new option to indicate higher bit numbers of quantized angle information in the form *ψ*) for a compressed beamforming report (121) than a STA Info Subfield according to the first WiFi scheme,
wherein the new option of the STA Info Subfield according to the second WiFi scheme is implemented by enhancing a Codebook Size field of the STA Info Subfield to a higher bit size than a maximum bit size defined for the Codebook Size field by the first WiFi scheme, in particular to a size of 2 bits,
wherein the additional bit combinations of the enhanced Codebook Size field define one or more indications of higher bit numbers (*ϕ*, *ψ*) for the compressed beamforming report (121)..

2. The beamformer device (110) of claim 1,
wherein the additional bit combinations of the enhanced Codebook Size field define one indication of higher bit numbers (*ϕ*, *ψ*) = {11, 9} for a number of tones, Ng, equal to 4 and one indication of higher bit numbers (*ϕ*, *ψ*) = {11, 9} for a number of tones, Ng, equal to 16.

3. The beamformer device (110) of claim 2,
wherein the two indications of higher bit numbers (*ϕ*, *ψ*) = {11, 9} are defined for an enhanced 2bit Codebook Size field when an additional bit of the enhanced 2bit Codebook Size field is indicating a logical one, and
wherein indications of bit numbers (*ϕ*, *ψ*) defined by the first WiFi scheme are preserved when the additional bit of the enhanced 2bit Codebook Size field is indicating a logical zero.

4. The beamformer device (110) of claim 3,
wherein for the enhanced 2bit Codebook Size field and a 2bit Feedback Type and Ng field within the STA Info Subfield, a bitmap comprising one or more entries is defined, each of the one or more entries comprising 4 bits and indicating a respective combination of an enhanced Codebook Size field with a size of 2 bits and a Feedback Type and Ng field with a size of 2 bits.

5. The beamformer device (110) of claim 1,
wherein the new option of the STA Info Subfield according to the second WiFi scheme is implemented by enhancing the STA Info Subfield to a higher bit size by adding a Codebook Type field of 1 bit while maintaining a 1 bit Codebook Size field, the Codebook Type field being a subfield,
wherein the additional bit combinations for the Codebook Size field and the additional Codebook Type field define one or more indications of higher bit numbers (*ϕ*, *ψ*) for the compressed beamforming report (121).

6. The beamformer device (110) of claim 5,
wherein the additional bit combinations of the enhanced STA Info Subfield are defined by setting the Codebook Type field to a logical one; and
wherein original settings of the enhanced STA Info Subfield as defined by the first WiFi scheme are maintained by setting the Codebook Type field to a logical zero.

7. The beamformer device (110) of claim 5 or 6,
wherein for the 1bit Codebook Size field and a 2bit Feedback Type and Ng field within the STA Info Subfield, a bitmap comprising one or more entries is defined, each of the one or more entries comprising 3 bits and indicating a respective combination of a Codebook Size field with a size of 1 bit and a Feedback Type and Ng field with a size of 2 bits.

8. The beamformer device (110) of one of the preceding claims, wherein the new option of the STA Info Subfield according to the second WiFi scheme is signaled within STA Info Subfield by a Codebook Size field and a Feedback Type and number of tones, Ng, field of the STA Info Subfield.

9. The beamformer device (110) of one of the preceding claims, wherein the first WiFi scheme is 802.11ax WiFi and wherein the second WiFi scheme is 802.11be WiFi.

10. A beamformee device (120) for reporting a compressed beamforming report (121) responsive to a beamforming announcement of a beamformer device (110) in a multi-user beamforming communication system, wherein the beamformee device (120) is configured to:
transmit a compressed beamforming report (121) to the beamformer device (110) of the multi-user beamforming communication system responsive to the beamforming announcement frame, in particular a Null Data Packet Announcement, NDPA, frame (111) received from the beamformer device (110),
wherein the compressed beamforming report (121) comprises a MIMO Control Field according to a second WiFi scheme supporting a larger MIMO size for beamforming than a first WiFi scheme,
wherein the MIMO Control Field according to the second WiFi scheme comprises a new option to indicate higher bit numbers of quantized angle information in the form (*ϕ*, *ψ*) for the compressed beamforming report than a MIMO Control Field according to the first WiFi scheme,
wherein the new option of the MIMO Control Field according to the second WiFi scheme is implemented by enhancing a Codebook Information field of the MIMO Control Field to a higher bit size than a maximum bit size defined for the Codebook Information field by the first WiFi scheme, in particular to a size of 2 bits,
wherein the additional bit combinations of the enhanced Codebook Information field define one or more indications of higher bit numbers (*ϕ*, *ψ*) for the compressed beamforming report (121).

11. The beamformee device (120) of claim 10,
wherein the additional bit combinations of the enhanced Codebook Information field define an indication of higher bit numbers (*ϕ*, *ψ*) = {11, 9}.

12. The beamformee device (120) of claim 11,
wherein the indication of higher bit numbers (*ϕ*, *ψ*) = {11, 9} is defined for an enhanced 2bit Codebook Information field when an additional bit of the enhanced 2bit Codebook Size field is indicating a logical one, and
wherein indications of bit numbers (*ϕ*, *ψ*) defined by the first WiFi scheme are preserved when the additional bit of the enhanced 2bit Codebook Information field is indicating a logical zero.

13. The beamformee device (120) of claim 10,
wherein the new option of the MIMO Control Field according to the second WiFi scheme is implemented by enhancing the MIMO Control Field to a higher bit size by adding a Codebook Type field of 1 bit while maintaining a 1 bit Codebook Information field,
wherein the additional bit combinations for the Codebook Information field and the additional Codebook Type field define one or more indications of higher bit numbers (*ϕ*, *ψ*) for the compressed beamforming report (121).

14. The beamformee device (120) of claim 13,
wherein the additional bit combinations of the enhanced MIMO Control Field are defined by setting the Codebook Type field to a logical one; and
wherein original settings of the enhanced MIMO Control Field as defined by the first WiFi scheme are maintained by setting the Codebook Type field to a logical zero.

15. The beamformee device (120) of claim 10,
wherein the new option of the MIMO Control Field according to the second WiFi scheme is implemented by maintaining a size of the MIMO Control Field and Codebook Size within the MIMO Control Field according to the first WiFi scheme, and replacing one or more indications of bit numbers (*ϕ*, *ψ*) defined for the first WiFi scheme to one or more indications of higher bit numbers (*ϕ*, *ψ*) defined for the second WiFi scheme.

## Patentansprüche

1. Beamformer-Vorrichtung (110) zum Ankündigen von Beamforming in einem Mehrbenutzer-Beamforming-Kommunikationssystem, wobei die Beamformer-Vorrichtung (110) konfiguriert ist zum:
Senden eines Beamforming-Ankündigungsrahmens, insbesondere eines Nulldatenpaketankündigungsrahmens, NDPA-Rahmen, (111), an eine Beamformee-Vorrichtung (120) des Mehrbenutzer-Beamforming-Kommunikationssystems, wobei der Beamforming-Ankündigungsrahmen ein Stationsinformations-Subfeld, STA-Info-Subfeld, gemäß einem zweiten WiFi-Schema umfasst, das eine größere MIMO-Größe für Beamforming unterstützt als ein erstes WiFi-Schema,
wobei das STA-Info-Subfeld gemäß dem zweiten WiFi-Schema eine neue Option zum Angeben höherer Bitzahlen quantisierter Winkelinformationen in der Form (*ϕ*, *Ψ*) für einen komprimierten Beamforming-Bericht (121) als ein STA-Info-Subfeld gemäß dem ersten WiFi-Schema umfasst,
wobei die neue Option des STA-Info-Subfelds gemäß dem zweiten WiFi-Schema implementiert wird, indem ein Codebuchgrößenfeld des STA-Info-Subfelds auf eine höhere Bitgröße als eine für das Codebuchgrößenfeld durch das erste WiFi-Schema definierte maximale Bitgröße, insbesondere auf eine Größe von 2 Bit, erweitert wird, wobei die zusätzlichen Bitkombinationen des erweiterten Codebuchgrößenfelds eine oder mehrere Angaben höherer Bitzahlen (*ϕ*, *Ψ*) für den komprimierten Beamforming-Bericht (121) definieren.

2. Beamformer-Vorrichtung (110) nach Anspruch 1, wobei die zusätzlichen Bitkombinationen des erweiterten Codebuchgrößenfelds eine Angabe höherer Bitzahlen (*ϕ*, *Ψ*) = {11, 9} für eine Anzahl von Tönen, Ng, gleich 4 und eine Angabe höherer Bitzahlen (*ϕ*, *Ψ*) = {11, 9} für eine Anzahl von Tönen, Ng, gleich 16 definieren.

3. Beamformer-Vorrichtung (110) nach Anspruch 2,
wobei die zwei Angaben höherer Bitzahlen (*ϕ*, *Ψ*) = {11, 9} für ein erweitertes 2-Bit-Codebuchgrößenfeld definiert werden, wenn ein zusätzliches Bit des erweiterten 2-Bit-Codebuchgrößenfelds eine logische Eins angibt, und
wobei Angaben zu Bitzahlen (*ϕ*, *Ψ*), die durch das erste WiFi-Schema definiert sind, behalten werden, wenn das zusätzliche Bit des erweiterten 2-Bit-Codebuchgrößenfelds eine logische Null angibt.

4. Beamformer-Vorrichtung (110) nach Anspruch 3,
wobei für das erweiterte 2-Bit-Codebuchgrößenfeld und ein 2-Bit-Bit-Feedbacktyp- und Ng-Feld innerhalb des STA-Info-Subfelds eine Bitmap definiert ist, die einen oder mehrere Einträge umfasst, wobei jeder des einen oder der mehreren Einträge 4 Bit umfasst und eine jeweilige Kombination aus einem erweiterten Codebuchgrößenfeld mit einer Größe von 2 Bit und einem Feedbacktyp- und Ng-Feld mit einer Größe von 2 Bit angibt.

5. Beamformer-Vorrichtung (110) nach Anspruch 1,
wobei die neue Option des STA-Info-Subfelds gemäß dem zweiten WiFi-Schema implementiert wird, indem das STA-Info-Subfeld auf eine höhere Bitgröße erweitert wird, indem ein Codebuchtypfeld von 1 Bit hinzugefügt wird, während ein 1-Bit-Codebuchgrößenfeld beibehalten wird, wobei das Codebuchtypfeld ein Subfeld ist, wobei die zusätzlichen Bitkombinationen für das Codebuchgrößenfeld und das zusätzliche Codebuchtypfeld eine oder mehrere Angaben höherer Bitzahlen (*ϕ*, *Ψ*) für den komprimierten Beamforming-Bericht (121) definieren.

6. Beamformer-Vorrichtung (110) nach Anspruch 5,
wobei die zusätzlichen Bitkombinationen des erweiterten STA-Info-Subfelds definiert werden, indem das Codebuchtypfeld auf eine logische Eins gesetzt wird; und wobei ursprüngliche Einstellungen des erweiterten STA-Info-Subfelds, wie sie durch das erste WiFi-Schema definiert sind, beibehalten werden, indem das Codebuchtypfeld auf eine logische Null gesetzt wird.

7. Beamformer-Vorrichtung (110) nach Anspruch 5 oder 6,
wobei für das 1-Bit-Codebuchgrößenfeld und ein 2-Bit-Feedbacktyp- und Ng-Feld innerhalb des STA-Info-Subfelds eine Bitmap definiert ist, die einen oder mehrere Einträge umfasst, wobei jeder des einen oder der mehreren Einträge 3 Bit umfasst und eine jeweilige Kombination aus einem Codebuchgrößenfeld mit einer Größe von 1 Bit und einem Feedbacktyp- und Ng-Feld mit einer Größe von 2 Bit angibt.

8. Beamformer-Vorrichtung (110) nach einem der vorstehenden Ansprüche, wobei die neue Option des STA-Info-Subfelds gemäß dem zweiten WiFi-Schema innerhalb des STA-Info-Subfelds durch ein Codebuchgrößenfeld und ein Feld für Feedbacktyp und Anzahl der Töne, Ng, des STA-Info-Subfelds signalisiert wird.

9. Beamformer-Vorrichtung (110) nach einem der vorstehenden Ansprüche, wobei das erste WiFi-Schema 802.11 ax WiFi ist und wobei das zweite WiFi-Schema 802.11 be WiFi ist.

10. Beamformee-Vorrichtung (120) zum Berichten eines komprimierten Beamforming-Berichts (121) als Reaktion auf eine Beamforming-Ankündigung einer Beamformer-Vorrichtung (110) in einem Mehrbenutzer-Beamforming-Kommunikationssystem, wobei die Beamformee-Vorrichtung (120) konfiguriert ist zum:
Senden eines komprimierten Beamforming-Berichts (121) an die Beamformer-Vorrichtung (110) des Mehrbenutzer-Beamforming-Kommunikationssystems als Reaktion auf den Beamforming-Ankündigungsrahmen, insbesondere einen Nulldatenpaketankündigungsrahmen, NDPA-Rahmen, (111), der von der Beamformer-Vorrichtung (110) empfangen wurde,
wobei der komprimierte Beamforming-Bericht (121) ein MIMO-Steuerfeld gemäß einem zweiten WiFi-Schema umfasst, das eine größere MIMO-Größe für das Beamforming unterstützt als ein erstes WiFi-Schema,
wobei das MIMO-Steuerfeld gemäß dem zweiten WiFi-Schema eine neue Option zum Angeben höherer Bitzahlen quantisierter Winkelinformationen in der Form (*ϕ*, *Ψ*) für den komprimierten Beamforming-Bericht als ein MIMO-Steuerfeld gemäß dem ersten WiFi-Schema umfasst,
wobei die neue Option des MIMO-Steuerfelds gemäß dem zweiten WiFi-Schema implementiert wird, indem ein Codebuchinformationsfeld des MIMO-Steuerfelds auf eine höhere Bitgröße als eine durch das erste WiFi-Schema für das Codebuchinformationsfeld definierte maximale Bitgröße, insbesondere auf eine Größe von 2 Bit, erweitert wird,
wobei die zusätzlichen Bitkombinationen des erweiterten Codebuchinformationsfelds eine oder mehrere Angaben höherer Bitzahlen (*ϕ*, *Ψ*) für den komprimierten Beamforming-Bericht (121) definieren.

11. Beamformee-Vorrichtung (120) nach Anspruch 10,
wobei die zusätzlichen Bitkombinationen des erweiterten Codebuchinformationsfelds eine Angabe höherer Bitzahlen (*ϕ*, *Ψ*) = {11, 9} definieren.

12. Beamformee-Vorrichtung (120) nach Anspruch 11,
wobei die Angabe höherer Bitzahlen (*ϕ*, *Ψ*) = {11, 9} für ein erweitertes 2-Bit-Codebuchinformationsfeld definiert wird, wenn ein zusätzliches Bit des erweiterten 2-Bit-Codebuchgrößenfelds eine logische Eins angibt, und
wobei Angaben zu Bitzahlen (*ϕ*, *Ψ*), die durch das erste WiFi-Schema definiert sind, behalten werden, wenn das zusätzliche Bit des erweiterten 2-Bit-Codebuchinformationsfelds eine logische Null angibt.

13. Beamformee-Vorrichtung (120) nach Anspruch 10,
wobei die neue Option des MIMO-Steuerfelds gemäß dem zweiten WiFi-Schema implementiert wird, indem das MIMO-Steuerfeld auf eine höhere Bitgröße erweitert wird, indem ein Codebuchtypfeld von 1 Bit hinzugefügt wird, während ein 1-Bit-Codebuchinformationsfeld beibehalten wird,
wobei die zusätzlichen Bitkombinationen für das Codebuchinformationsfeld und das zusätzliche Codebuchtypfeld eine oder mehrere Angaben höherer Bitzahlen (*ϕ*, *Ψ*) für den komprimierten Beamforming-Bericht (121) definieren.

14. Beamformee-Vorrichtung (120) nach Anspruch 13,
wobei die zusätzlichen Bitkombinationen des erweiterten MIMO-Steuerfelds definiert werden, indem das Codebuchtypfeld auf eine logische Eins gesetzt wird; und wobei ursprüngliche Einstellungen des erweiterten MIMO-Steuerfelds, wie sie durch das erste WiFi-Schema definiert sind, beibehalten werden, indem das Codebuchtypfeld auf eine logische Null gesetzt wird.

15. Beamformee-Vorrichtung (120) nach Anspruch 10,
wobei die neue Option des MIMO-Steuerfelds gemäß dem zweiten WiFi-Schema implementiert wird, indem eine Größe des MIMO-Steuerfelds und die Codebuchgröße innerhalb des MIMO-Steuerfelds gemäß dem ersten WiFi-Schema beibehalten werden und eine oder mehrere Angaben von Bitzahlen (*ϕ*, *Ψ*), die für das erste WiFi-Schema definiert sind, durch eine oder mehrere Angaben höherer Bitzahlen (*ϕ*, *Ψ*), die für das zweite WiFi-Schema definiert sind, ersetzt werden.

## Revendications

1. Dispositif de formation de faisceaux (110) permettant d'annoncer une formation de faisceaux dans un système de communication de formation de faisceaux multi-utilisateur, dans lequel le dispositif de formation de faisceaux (110) est configuré pour :
transmettre une trame d'annonce de formation de faisceaux, en particulier une trame d'annonce de paquet de données nulles, NDPA, (111) à un dispositif soumis à formation de faisceaux (120) du système de communication de formation de faisceaux multi-utilisateur,
dans lequel la trame d'annonce de formation de faisceaux comprend un sous-champ d'informations de station, sous-champ «STA Info», selon un second schéma WiFi prenant en charge une taille MIMO plus importante pour une formation de faisceaux qu'un premier schéma WiFi,
dans lequel le sous-champ «STA Info» selon le second schéma WiFi comprend une nouvelle option pour indiquer des nombres de bits supérieurs d'informations d'angles quantifiés sous la forme (*ϕ*, *Ψ*) pour un rapport de formation de faisceaux compressé (121) à un sous-champ «STA Info» selon le premier schéma WiFi,
dans lequel la nouvelle option du sous-champ «STA Info» selon le second schéma WiFi est mise en œuvre en augmentant un champ de taille de livre de codes, «Codebook Size», du sous-champ «STA Info» à une taille de bit supérieure à une taille de bit maximale définie pour le champ «Codebook Size» par le premier schéma WiFi, en particulier à une taille de 2 bits,
dans lequel les combinaisons de bits supplémentaires du champ «Codebook Size» augmenté définissent une ou plusieurs indications de nombres de bits supérieurs (*ϕ*, *Ψ*) pour le rapport de formation de faisceaux compressé (121).

2. Dispositif de formation de faisceaux (110) selon la revendication 1,
dans lequel les combinaisons de bits supplémentaires du champ «Codebook Size» augmenté définissent une indication de nombres de bits supérieurs (*ϕ*, *Ψ*) = {11, 9} pour un nombre de tonalités, Ng, égal à 4 et une indication de nombres de bits supérieurs (*ϕ*, *Ψ*) = {11, 9} pour un nombre de tonalités, Ng, égal à 16.

3. Dispositif de formation de faisceaux (110) selon la revendication 2,
dans lequel les deux indications de nombres de bits supérieurs (*ϕ*, *Ψ*) = {11, 9} sont définies pour un champ «Codebook Size» augmenté à 2 bits lorsqu'un bit supplémentaire du champ «Codebook Size» augmenté à 2 bits indique un 1 logique, et dans lequel des indications de nombres de bits (*ϕ*, *Ψ*) définis par le premier schéma WiFi sont conservées lorsque le bit supplémentaire du champ «Codebook Size» augmenté à 2 bits indique un 0 logique.

4. Dispositif de formation de faisceaux (110) selon la revendication 3,
dans lequel, pour le champ «Codebook Size» augmenté à 2 bits et un champ de type de rétroaction et de Ng, «Feedback Type and Ng», à 2 bits dans le sous-champ «STA Info», une table de bits comprenant une ou plusieurs entrées est définie, chacune de la ou des entrées comprenant 4 bits et indiquant une combinaison respective d'un champ «Codebook Size» augmenté d'une taille de 2 bits et d'un champ «Feedback Type and Ng» d'une taille de 2 bits.

5. Dispositif de formation de faisceaux (110) selon la revendication 1,
dans lequel la nouvelle option du sous-champ «STA Info» selon le second schéma WiFi est mise en œuvre en augmentant le sous-champ «STA Info» à une taille de bit supérieure en ajoutant un champ de type de livre de codes, «Codebook Type», de 1 bit tout en maintenant un champ «Codebook Size» de 1 bit, le champ «Codebook Type» étant un sous-champ,
dans lequel les combinaisons de bits supplémentaires pour le champ «Codebook Size» et le champ «Codebook Type» supplémentaire définissent une ou plusieurs indications de nombres de bits supérieurs (*ϕ*, *Ψ*) pour le rapport de formation de faisceaux compressé (121).

6. Dispositif de formation de faisceaux (110) selon la revendication 5,
dans lequel les combinaisons de bits supplémentaires du sous-champ «STA Info» augmenté sont définies en attribuant au champ «Codebook Type» un 1 logique ; et dans lequel des paramètres d'origine du sous-champ «STA Info» augmenté, tels que définis par le premier schéma WiFi, sont maintenus en attribuant au champ «Codebook Type» un 0 logique.

7. Dispositif de formation de faisceaux (110) selon la revendication 5 ou 6,
dans lequel, pour le champ «Codebook Size» à 1 bit et le champ «Feedback Type and Ng» à 2 bits dans le sous-champ «STA Info», une table de bits comprenant une ou plusieurs entrées est définie, chacune de la ou des entrées comprenant 3 bits et
indiquant une combinaison respective d'un champ «Codebook Size» d'une taille de 1 bit et d'un champ «Feedback Type and Ng» d'une taille de 2 bits.

8. Dispositif de formation de faisceaux (110) selon l'une des revendications précédentes, dans lequel la nouvelle option du sous-champ «STA Info» selon le second schéma WiFi est signalée dans le sous-champ «STA Info» par un champ «Codebook Size» et un champ «Feedback Type and number of tones (nombre de tonalités), Ng» du sous-champ «STA Info».

9. Dispositif de formation de faisceaux (110) selon l'une des revendications précédentes, dans lequel le premier schéma WiFi est 802.11 ax WiFi et dans lequel le second schéma WiFi est 802.11be WiFi.

10. Dispositif soumis à formation de faisceaux (120) permettant d'effectuer un rapport d'un rapport de formation de faisceaux compressé (121) en réponse à une annonce de formation de faisceaux d'un dispositif de formation de faisceaux (110) dans un système de communication de formation de faisceaux multi-utilisateur, dans lequel le dispositif soumis à formation de faisceaux (120) est configuré pour :
transmettre un rapport de formation de faisceaux compressé (121) au dispositif de formation de faisceaux (110) du système de communication de formation de faisceaux multi-utilisateur en réponse à la trame d'annonce de formation de faisceaux, en particulier une trame d'annonce de paquet de données nulles, NDPA, (111) reçue du dispositif de formation de faisceaux (110),
dans lequel le rapport de formation de faisceaux compressé (121) comprend un champ de commande MIMO selon un second schéma WiFi prenant en charge une taille MIMO plus importante pour une formation de faisceaux qu'un premier schéma WiFi,
dans lequel le champ de commande MIMO selon le second schéma WiFi comprend une nouvelle option pour indiquer des nombres de bits supérieurs d'informations d'angles quantifiés sous la forme (*ϕ*, *Ψ*) pour le rapport de formation de faisceaux compressé qu'un champ de commande MIMO selon le premier schéma WiFi,
dans lequel la nouvelle option du champ de commande MIMO, «MIMO Control», selon le second schéma WiFi est mise en œuvre en augmentant un champ d'informations de livre de codes, «Codebook Information», du champ «MIMO Control» à une taille de bit supérieure à une taille de bit maximale définie pour le champ «Codebook Information» par le premier schéma WiFi, en particulier à une taille de 2 bits,
dans lequel les combinaisons de bits supplémentaires du champ «Codebook Information» augmenté définissent une ou plusieurs indications de nombres de bits supérieurs (*ϕ*, *Ψ*) pour le rapport de formation de faisceaux compressé (121).

11. Dispositif soumis à formation de faisceaux (120) selon la revendication 10,
dans lequel les combinaisons de bits supplémentaires du champ «Codebook Information» augmenté définissent une indication de nombres de bits supérieurs (*ϕ*, *Ψ*) = {11, 9}.

12. Dispositif soumis à formation de faisceaux (120) selon la revendication 11, dans lequel l'indication de nombres de bits supérieurs (*ϕ*, *Ψ*) = {11, 9} est définie pour un champ «Codebook Information» à 2 bits augmenté lorsqu'un bit supplémentaire du champ «Codebook Size» à 2 bits augmenté indique un 1 logique, et
dans lequel des indications de nombres de bits (*ϕ*, *Ψ*) définis par le premier schéma WiFi sont conservées lorsque le bit supplémentaire du champ «Codebook Information» augmenté à 2 bits indique un 0 logique.

13. Dispositif soumis à formation de faisceaux (120) selon la revendication 10, dans lequel la nouvelle option du champ «MIMO Control» selon le second schéma WiFi est mise en œuvre en augmentant le champ «MIMO Control» à une taille de bit supérieure en ajoutant un champ «Codebook Type» de 1 bit tout en maintenant un champ «Codebook Information» de 1 bit,
dans lequel les combinaisons de bits supplémentaires pour le champ «Codebook Information» et le champ «Codebook Type» supplémentaire définissent une ou plusieurs indications de nombres de bits supérieurs (*ϕ*, *Ψ*) pour le rapport de formation de faisceaux compressé (121).

14. Dispositif soumis à formation de faisceaux (120) selon la revendication 13,
dans lequel les combinaisons de bits supplémentaires du champ «MIMO Control» augmenté sont définies en attribuant au champ «Codebook Type» un 1 logique ; et dans lequel des paramètres d'origine du champ «MIMO Control» augmenté, tels que définis par le premier schéma WiFi, sont maintenus en attribuant au champ «Codebook Type» un 0 logique.

15. Dispositif soumis à formation de faisceaux (120) selon la revendication 10, dans lequel la nouvelle option du champ «MIMO Control» selon le second schéma WiFi est mise en œuvre en maintenant une taille du champ «MIMO Control» et «Codebook Size» dans le champ «MIMO Control» selon le premier schéma WiFi, et en remplaçant une ou plusieurs indications de nombres de bits (*ϕ*, *Ψ*) définies pour le premier schéma WiFi par une ou plusieurs indications de nombres de bits supérieurs (*ϕ*, *Ψ*) définies pour le second schéma WiFi.
